# EUROPEAN PATENT APPLICATION

(11) **EP 4 622 377 A1**
(43) Date of publication of application: **24.09.2025**
(21) Application number: 23890644.0
(22) Date of filing: 04.11.2023
(51) Int. Cl.: H04W 72/231

(54) **METHOD AND APPARATUS USED IN COMMUNICATION NODE FOR RADIO COMMUNICATION**

(30) Priority: 18.11.2022 CN 202211447101
(71) Applicant: Apogee Networks, LLC, Dallas, TX 75201 (US)
(72) Inventor: YU, Qiaoling, Shanghai 201206 (CN); ZHANG, Xiaobo, Shanghai 201206 (CN)
(74) Representative: Gunzelmann, Rainer
(86) International application number: PCT/CN2023/129822
(87) International publication number: WO 2024/104208

(57) **Abstract**

Disclosed in the present application are a method and apparatus used in a communication node for radio communication. The method comprises: a communication node receiving first signaling, wherein the first signaling indicates K1 candidate cells, which are at least configured for a first serving cell, K1 being an integer greater than 1; and applying at least one of K1 candidate configurations along with the first signaling, the first signaling is used for mobility control; the K1 candidate configurations respectively correspond to the K1 candidate cells; each of the K1 candidate configurations comprises a candidate cell identifier of one of the K1 candidate cells, and the candidate cell identifiers of any two of the K1 candidate cells are different; and the first signaling is used for triggering a behavior to apply at least one of the K1 candidate configurations.

## Description

### Technical Field

The present application relates to a transmission method and apparatus used in a radio communication system, in particular to a transmission method and apparatus for mobility.

### Background Art

Mobility of User Equipment (UE) is an important feature of a radio network. In order to further enhance mobility performance of the UE, the 3GPP (3rd Generation Partner Project) RAN (Radio Access Network) #94e meeting decided to carry out a Work Item (WI) "NR (New Radio) Further NR mobility enhancements". Therein, L1 (Layer 1)/L2 (Layer 2) triggered mobility (LTM) is an important research direction for reducing delay, overhead and interruption time, and LTM is based on L1/L2 signaling.

### Summary of the Invention

One solution for implementing LTM is measurement reporting based on L1/L2 signaling and handover commands based on L1/L2 signaling. Researchers found that when an execution is based on LTM, it will lead to more frequent changes of serving cells and ping-pong effects, and a random access process initiated on a target cell will increase a transmission delay of the UE, thereby affecting the QoS (Quality of Service) of the UE. It is required to further research how to enhance the robustness of UE mobility or shorten the transmission delay.

In view of the above-mentioned problem, the present application provides a mobility management solution. In view of the description of the above-mentioned problem, an NR system is used as one example; the present application is also applicable to scenarios, for example, a LTE system; and further, although the present application provides a specific implementation for LTM, the present application can also be used for scenarios, for example, an L3-triggered mobility, to achieve a technical effect similar to that of L1/L2-triggered mobility. Further, although the original intention of the present application is directed at a Uu radio, the present application can also be used for a PC5 port. Further, although the original intention of the present application is directed at a terminal and base station scenario, the present application is also applicable to a V2X (Vehicle-to-Everything) scenario and communication scenarios between the terminal and a relay and between the relay and the base station, to achieve similar technical effects in the terminal and base station scenario. Further, although the original intention of the present application is directed at the terminal and base station scenario, the present application is also applicable to an IAB (Integrated Access and Backhaul) communication scenario, to achieve similar technical effects in the terminal and base station scenario. Further, although the original intention of the present application is directed at a terrestrial network scenario, the present application is also applicable to a Non-Terrestrial Network (NTN) communication scenario, to achieve similar technical effects in the TN scenario. In addition, the use of a unified solution for different scenarios also facilitates the reduction of hardware complexity and costs.

As one embodiment, the interpretation of the terminologies in the present application refers to the definition of the 3GPP specification protocol TS36 series.

As one embodiment, the interpretation of the terminologies in the present application refers to the definition of the 3GPP standard protocol TS38 series.

As one embodiment, the interpretation of the terminologies in the present application refers to the definition of the 3GPP standard protocol TS37 series.

As one embodiment, the interpretation of the terminologies in the present application refers to the definition of the standard protocol of the IEEE (Institute of Electrical and Electronics Engineers).

It should be explained that in the absence of conflicts, the embodiments in any node of the present application and the features in the embodiments can be applied to any other node. In the absence of conflicts, the embodiments of the present application and the features in the embodiments can be arbitrarily combined with each other.

The present application discloses a method used in a first node for radio communication, comprising:
receiving first signaling, the first signaling indicating K1 candidate cells, which are at least configured for a first serving cell, and K1 being an integer greater than 1; and
applying at least one of K1 candidate configurations along with the first signaling,
wherein the first signaling is used for mobility control; the K1 candidate configurations respectively correspond to the K1 candidate cells; each of the K1 candidate configurations comprises a candidate cell identifier of one of the K1 candidate cells, and the candidate cell identifiers of any two of the K1 candidate cells are different; and the first signaling is used for triggering a behavior to apply at least one of the K1 candidate configurations.

As one embodiment, the problem to be solved by the present application comprises: how to enhance the robustness of UE mobility.

As one embodiment, the problem to be solved by the present application comprises: how to shorten the transmission delay.

As one embodiment, the characteristic of the above-mentioned method comprises: the K1 candidate cells are configured for the first serving cell.

As one embodiment, the characteristic of the above-mentioned method comprises: the K1 candidate cells are configured for a plurality of serving cells.

As one embodiment, the characteristic of the above-mentioned method comprises: the K1 candidate cells are configured for less than K1 serving cells.

As one embodiment, the characteristic of the above-mentioned method comprises: the K1 candidate cells are configured for K1 serving cells.

As one embodiment, the characteristic of the above-mentioned method comprises: one of the K1 candidate configurations is applied along with the first signaling.

As one embodiment, the characteristic of the above-mentioned method comprises: a plurality of candidate configurations of the K1 candidate configurations are applied along with the first signaling.

As one embodiment, the characteristic of the above-mentioned method comprises: less than K1 candidate configurations of the K1 candidate configurations are applied with first signaling.

As one embodiment, the characteristic of the above-mentioned method comprises: K1 candidate configurations of the K1 candidate configurations are applied along with the first signaling.

As one embodiment, the characteristic of the above-mentioned method comprises: the first signaling indicates the K1 candidate cells used for mobility.

As one embodiment, the characteristic of the above-mentioned method comprises: the first signaling is L2 signaling, and the first serving cell is SpCell.

As one embodiment, the characteristic of the above-mentioned method comprises: the first signaling is the L2 signaling, and the first serving cell is SCell.

As one embodiment, the characteristic of the above-mentioned method comprises: the first signaling is L3 signaling, and the first serving cell is SpCell.

As one embodiment, the benefit of the above-mentioned method comprises: enhancing the robustness of UE mobility.

As one embodiment, the benefit of the above-mentioned method comprises: shortening the transmission delay.

According to one aspect of the present application, it is characterized by receiving second signaling, which is used for determining K2 candidate configurations,
wherein the second signaling is RRC sub-layer signaling; each of the K1 candidate configurations is one of the K2 candidate configurations; and K1 is not greater than K2.

According to one aspect of the present application, it is characterized by comprising:
sending third signaling, which indicates the measurement results of at least the K1 candidate cells,
wherein the third signaling is signaling under an RRC sub-layer; and the third signaling is used for triggering the first signaling.

According to one aspect of the present application, it is characterized in that the K1 candidate configurations are respectively configured for K1 serving cells, and the first serving cell is one of the K1 serving cells; and the behavior to apply at least one of the K1 candidate configurations comprises: applying each of the K1 candidate configurations.

According to one aspect of the present application, it is characterized by comprising:
determining a first candidate cell among the K1 candidate cells,
wherein at least a first condition being satisfied is used for determining the first candidate cell among the K1 candidate cells; the first condition is independent of the measurement results of the K1 candidate cells; the behavior to apply at least one of the K1 candidate configurations comprises: applying a first candidate configuration of the K1 candidate configurations; the K1 candidate configurations are configured for the first serving cell; and the first candidate configuration is one of the K1 candidate configurations.

According to one aspect of the present application, it is characterized in that the first condition comprises the first candidate cell being configured to be free of random access.

According to one aspect of the present application, it is characterized in that the first condition comprises a first timer being running; and the first timer is used for determining whether uplink of the first candidate cell is time-aligned.

According to one aspect of the present application, it is characterized by comprising:
in response to applying the at least one of the K1 candidate configurations, sending fourth signaling,
wherein the fourth signaling is used for indicating that at least one of the K1 candidate configurations is applied.

The present application discloses a method used in a second node for radio communication, comprising:
sending first signaling, the first signaling indicating K1 candidate cells, which are at least configured for a first serving cell, and K1 being an integer greater than 1,
wherein at least one of K1 candidate configurations is applied along with the first signaling; the first signaling is used for mobility control; the K1 candidate configurations respectively correspond to the K1 candidate cells; each of the K1 candidate configurations comprises a candidate cell identifier of one of the K1 candidate cells, and the candidate cell identifiers of any two of the K1 candidate cells are different; and the first signaling is used for triggering a behavior to apply at least one of the K1 candidate configurations.

According to one aspect of the present application, it is characterized by sending second signaling, which is used for determining K2 candidate configurations,
wherein the second signaling is RRC sub-layer signaling; each of the K1 candidate configurations is one of the K2 candidate configurations; and K1 is not greater than K2.

According to one aspect of the present application, it is characterized by comprising:
receiving third signaling, which indicates the measurement results of at least the K1 candidate cells,
wherein the third signaling is signaling under an RRC sub-layer; and the third signaling is used for triggering the first signaling.

According to one aspect of the present application, it is characterized in that the K1 candidate configurations are respectively configured for K1 serving cells, and the first serving cell is one of the K1 serving cells; and the behavior to apply at least one of the K1 candidate configurations comprises: applying each of the K1 candidate configurations.

According to one aspect of the present application, it is characterized in that the first candidate cell is determined among the K1 candidate cells; at least the first condition being satisfied is used for determining the first candidate cell among the K1 candidate cells; the first condition is independent of the measurement results of the K1 candidate cells; the behavior to apply at least one of the K1 candidate configurations comprises: applying a first candidate configuration of the K1 candidate configurations; the K1 candidate configurations are configured for the first serving cell; and the first candidate configuration is one of the K1 candidate configurations.

According to one aspect of the present application, it is characterized in that the first condition comprises the first candidate cell being configured to be free of random access.

According to one aspect of the present application, it is characterized in that the first condition comprises a first timer being running; and the first timer is used for determining whether uplink of the first candidate cell is time-aligned.

According to one aspect of the present application, it is characterized by comprising:
receiving fourth signaling,
wherein in response to applying the at least one of the K1 candidate configurations, the fourth signaling is sent; and the fourth signaling is used for indicating that the at least one of the K1 candidate configurations is applied.

The present application discloses a first node for radio communication, comprising:
a first processor for receiving first signaling, the first signaling indicating K1 candidate cells, which are at least configured for a first serving cell, and K1 being an integer greater than 1; and applying at least one of K1 candidate configurations along with the first signaling,
wherein the first signaling is used for mobility control; the K1 candidate configurations respectively correspond to the K1 candidate cells; each of the K1 candidate configurations comprises a candidate cell identifier of one of the K1 candidate cells, and the candidate cell identifiers of any two of the K1 candidate cells are different; and the first signaling is used for triggering a behavior to apply at least one of the K1 candidate configurations.

The present application discloses a second node for radio communication, comprising:
a second processor for sending first signaling, the first signaling indicating K1 candidate cells, which are at least configured for a first serving cell, and K1 being an integer greater than 1,
wherein at least one of K1 candidate configurations is applied along with the first signaling; the first signaling is used for mobility control; the K1 candidate configurations respectively correspond to the K1 candidate cells; each of the K1 candidate configurations comprises a candidate cell identifier of one of the K1 candidate cells, and the candidate cell identifiers of any two of the K1 candidate cells are different; and the first signaling is used for triggering a behavior to apply at least one of the K1 candidate configurations.

As one embodiment, compared with a traditional solution, the present application has the following advantages:
- . enhancing the robustness of UE mobility; and
- . shortening the transmission delay.

### Brief Description of the Drawings

Other features, purposes, and advantages of the present application will become more apparent by reading the detailed description of the non-limiting embodiments with reference to the following figures:
FIG. 1 shows a flow chart of a transmission of first signaling according to one embodiment of the present application;
FIG. 2 shows a schematic diagram of a network architecture according to one embodiment of the present application;
FIG. 3 shows a schematic diagram of an embodiment of radio protocol architectures for a user plane and a control plane according to one embodiment of the present application;
FIG. 4 shows a schematic diagram of a first communication device and a second communication device according to one embodiment of the present application;
FIG. 5 shows a radio signal transmission flow chart according to one embodiment of the present application;
FIG. 6 shows a radio signal transmission flow chart according to another embodiment of the present application;
FIG. 7 shows a radio signal transmission flow chart according to yet another embodiment of the present application;
FIG. 8 shows a schematic diagram in which a first condition comprises a first candidate cell being configured to be free of random access according to one embodiment of the present application;
FIG. 9 shows a schematic diagram in which a first condition comprises a first timer being running according to one embodiment of the present application;
FIG. 10 shows a schematic diagram of all or parts of a structure of first signaling according to one embodiment of the present application;
FIG. 11 shows a schematic diagram of all or parts of a structure of first signaling according to another embodiment of the present application;
FIG. 12 shows a radio signal transmission flow chart according to yet another embodiment of the present application;
FIG. 13 shows a structural block diagram of a processing device for a first node according to one embodiment of the present application; and
FIG. 14 shows a structural block diagram of a processing device used in a second node device according to one embodiment of the present application.

### Detailed Description of Embodiments

The technical solution of the present application will be further described in detail below in conjunction with the accompanying drawings. It should be explained that in the absence of conflicts, the embodiments in the present application and the features in the embodiments can be arbitrarily combined with each other.

### Embodiment 1

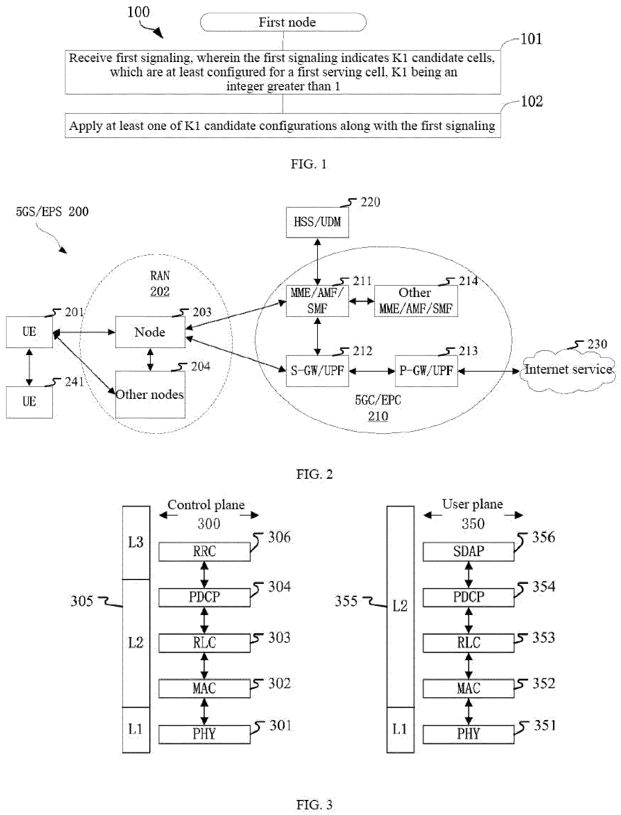

Embodiment 1 illustrates a flow chart of a transmission of first signaling according to one embodiment of the present application, as shown in FIG. 1. In FIG. 1, each block represents one step, and it is particularly important to emphasize that the order of the blocks in the figure does not represent a temporal sequence between the steps represented.

In Embodiment 1, in step 101, a first node in the present application receives first signaling, wherein the first signaling indicates K1 candidate cells, which are at least configured for the first serving cell, K1 being an integer greater than 1; and in step 102, at least one of K1 candidate configurations is applied along with the first signaling, wherein the first signaling is used for mobility control; the K1 candidate configurations respectively correspond to the K1 candidate cells; each of the K1 candidate configurations comprises a candidate cell identifier of one of the K1 candidate cells, and the candidate cell identifiers of any two of the K1 candidate cells are different; and the first signaling is used for triggering a behavior to apply at least one of the K1 candidate configurations.

As one embodiment, the first signaling is transmitted by a PDSCH (Physical Downlink Shared Channel).

As one embodiment, the first signaling is transmitted by a DL-SCH (Downlink Shared Channel).

As one embodiment, the first signaling is one RRC (Radio Resource Control) message.

As one embodiment, the first signaling is MAC (Medium Access Control) sub-layer signaling.

As one embodiment, the first signaling is one MAC CE (Control Element).

As one embodiment, the first signaling is one MAC CE, the first signaling belongs to one MAC subPDU, the one MAC subPDU comprises one MAC subheader, the one MAC subheader comprises one LCID (Logical Channel ID) field, and the LCID field is set as 37 or 38 or 39 or 40 or 41 or 42.

As one embodiment, the first signaling is one MAC CE, the first signaling belongs to one MAC subPDU, the one MAC subPDU comprises one MAC subheader, the one MAC subheader comprises one eLCID (extended LCID) field, and the eLCID field is set as an integer not less than 0 and not greater than 228.

As one embodiment, the first signaling is one MAC CE, the first signaling belongs to one MAC subPDU, the one MAC subPDU comprises one MAC subheader, the one MAC subheader comprises one eLCID field, and the one eLCID field is set as 228 or 227 or 226 or 225 or 224 or 223 or 222 or 221 or 220 or 219 or 218 or 217 or 216 or 215.

As one embodiment, the first signaling is physical layer signaling.

As one embodiment, the first signaling is one DCI (Downlink Control Information).

As one embodiment, the first signaling is transmitted by a PDCCH (Physical Downlink Control Channel).

As one embodiment, the first signaling comprises the K1 candidate configurations.

As one embodiment, the first signaling does not comprise the K1 candidate configurations.

As one embodiment, the first signaling comprises an identifier of the first serving cell.

As one embodiment, the first signaling does not comprise the identifier of the first serving cell.

As one embodiment, the first signaling indicates candidate cell identifiers of the K1 candidate cells.

As one embodiment, the first signaling indicates candidate configuration identifiers of the K1 candidate configurations.

As one embodiment, the first signaling indicates K1 candidate cell identifiers, and the K1 candidate cell identifiers indicate the K1 candidate cells.

As one embodiment, the first signaling indicates K1 candidate configuration identifiers, and the K1 candidate configuration identifiers indicate the K1 candidate cells.

As one embodiment, the first signaling indicates 1 candidate configuration identifier, and the 1 candidate configuration identifier indicates the K1 candidate cells.

As one embodiment, a phrase "the first signaling indicating K1 candidate cells" comprises: the first signaling indicates the candidate cell identifier of each of the K1 candidate cells.

As one embodiment, the phrase "the first signaling indicating K1 candidate cells" comprises: the first signaling indicates one candidate cell group, and the one candidate cell group comprises the K1 candidate cells.

As one sub-embodiment of this embodiment, the one candidate cell group is a candidate MCG (Master Cell Group).

As one sub-embodiment of this embodiment, the one candidate cell group is a candidate SCG (Secondary Cell Group).

As one sub-embodiment of this embodiment, the first signaling indicates one candidate cell group, and the K1 candidate cells are respectively a PCell (Primary Cell) and (K1-1) SCells (Secondary Cells) in the one candidate cell group.

As one sub-embodiment of this embodiment, the first signaling indicates one candidate cell group, and the K1 candidate cells are respectively the PSCell (Primary SCG Cell) and the (K1-1) SCells in the one candidate cell group.

As one sub-embodiment of this embodiment, the first signaling comprises the one candidate configuration identifier, and the one candidate configuration identifier indicates the one candidate cell group.

As one sub-embodiment of this embodiment, the first signaling comprises the candidate cell identifier of each of the K1 candidate cells.

As one sub-embodiment of this embodiment, the first signaling comprises the K1 candidate configuration identifiers, and the K1 candidate configuration identifiers respectively indicate the K1 candidate configurations.

As one embodiment, the phrase "the first signaling indicating K1 candidate cells" comprises: the first signaling comprises the K1 candidate configuration identifiers, and the K1 candidate configuration identifiers respectively indicate the K1 candidate cells.

As one embodiment, the phrase "the first signaling indicating K1 candidate cells" comprises: the first signaling indicates K1 candidate cell groups, and each of the K1 candidate cell groups respectively comprises one of the K1 candidate cells.

As one sub-embodiment of this embodiment, the first signaling indicates the K1 candidate cell groups, and the K1 candidate cells are respectively the SpCells in the K1 candidate cell groups.

As one sub-embodiment of this embodiment, the first signaling indicates the K1 candidate cell groups, and the K1 candidate cells are respectively the PCell in the K1 candidate cell groups.

As one sub-embodiment of this embodiment, the first signaling comprises the K1 candidate configuration identifiers, and the K1 candidate configuration identifiers respectively indicate the K1 candidate cell groups.

As one embodiment, the candidate cell identifier of one candidate cell is not less than 0 and not greater than one threshold value.

As one embodiment, the candidate cell identifier of one candidate cell is a non-negative integer.

As one embodiment, the candidate cell identifier of one candidate cell is configured.

As one embodiment, the candidate cell identifier of one candidate cell comprises PCI (PhysCellId) of the one candidate cell.

As one embodiment, the candidate cell identifier of one candidate cell is the PCI of the one candidate cell.

As one embodiment, the candidate cell identifier of one candidate cell is an index of one TCI (Transmission Configuration Indicator).

As one embodiment, the candidate cell identifier of one candidate cell is an index of a CORESET (control resource set).

As one embodiment, the candidate cell identifier of one candidate cell is an index of a Search Space (SS).

As one embodiment, the candidate cell identifier of one candidate cell comprises the PCI and frequency information of the one candidate cell.

As one embodiment, the candidate cell identifier of one candidate cell is a serving cell identifier of the one candidate cell.

As one embodiment, the candidate cell identifier of one candidate cell is an index of the one candidate cell.

As one embodiment, the candidate cell identifier of one candidate cell is an index of the one candidate cell in one candidate cell group.

As one embodiment, the candidate cell identifier of one candidate cell is a candidate configuration index corresponding to the one candidate cell.

As one embodiment, one candidate configuration identifier is not less than 0 and not greater than one threshold value.

As one embodiment, one candidate configuration identifier is a non-negative integer.

As one embodiment, one candidate configuration identifier is configured.

As one embodiment, one candidate configuration identifier is configured for the one candidate configuration.

As one embodiment, one candidate configuration identifier indicates one candidate cell.

As one embodiment, one candidate configuration identifier indicates one candidate cell group.

As one embodiment, one candidate configuration identifier indicates one candidate configuration.

As one embodiment, one candidate configuration identifier indicates one candidate cell and a candidate configuration corresponding to the one candidate cell.

As one embodiment, one candidate configuration identifier uniquely indicates one candidate cell for one serving cell of the first node.

As one embodiment, one candidate configuration identifier uniquely indicates one candidate cell for the first serving cell of the first node.

As one embodiment, one candidate configuration identifier uniquely indicates one candidate cell for one cell group of the first node, the one cell group is an MCG or an SCG, and the one cell group comprises the first serving cell.

As one embodiment, each of the K1 candidate cells is configured for the first serving cell.

As one embodiment, any of the K1 candidate cells is not configured for any cell other than the first serving cell.

As one embodiment, at least one of the K1 candidate cells is configured for one cell other than the first serving cell.

As one embodiment, each of the K1 candidate cells is one candidate cell in the same one candidate cell group.

As one embodiment, each of the K1 candidate cells is one candidate cell of the first serving cell.

As one embodiment, each of the K1 candidate cells is one candidate cell in the cell group to which the first serving cell belongs.

As one embodiment, each of the K1 candidate cells is one candidate PSCell.

As one embodiment, each of the K1 candidate cells is one candidate PCell.

As one embodiment, the first serving cell is one serving cell of the first node.

As one embodiment, the first serving cell is one serving cell in the MCG of the first node.

As one embodiment, the first serving cell is one serving cell in the SCG of the first node.

As one embodiment, the first serving cell is the PCell of the first node.

As one embodiment, the first serving cell is a source PCell of the first node.

As one embodiment, the first serving cell is the PSCell of the first node.

As one embodiment, the first serving cell is the source PSCell of the first node.

As one embodiment, the first serving cell is one SCell of the first node.

As one embodiment, the first serving cell is one source SCell of the first node.

As one embodiment, K1 is fixed.

As one embodiment, K1 is variable.

As one embodiment, K1 is not greater than one threshold value, and the one threshold value is an integer greater than 2.

As one embodiment, K1 is equal to 2.

As one embodiment, K1 is greater than 2.

As one embodiment, a phrase of the K1 candidate cells being at least configured for the first serving cell comprises: the K1 candidate cells are configured for only the first serving cell.

As one sub-embodiment of this embodiment, any of the K1 candidate cells is one candidate cell of the first serving cell.

As one sub-embodiment of this embodiment, any of the K1 candidate cells is one candidate SpCell, and the first serving cell is the source SpCell.

As one sub-embodiment of this embodiment, any of the K1 candidate cells is one candidate SCell, and the first serving cell is the source SCell.

As one embodiment, the phrase of the K1 candidate cells being at least configured for the first serving cell comprises: the K1 candidate cells are configured for a plurality of serving cells, and the first serving cell is one of the plurality of serving cells.

As one sub-embodiment of this embodiment, the K1 candidate cells are configured to the cell group to which the first serving cell belongs.

As one sub-embodiment of this embodiment, any of the K1 candidate cells belongs to one candidate cell group of the cell group to which the first serving cell belongs.

As one sub-embodiment of this embodiment, the K1 candidate cells comprise at least a target SpCell, and the first serving cell is the source SpCell.

As one sub-embodiment of this embodiment, the K1 candidate cells comprise the target SpCell and at least one SCell.

As one sub-embodiment of this embodiment, the K1 candidate configurations are configured for at least two serving cells.

As one sub-embodiment of this embodiment, the K1 candidate configurations are configured for greater than K1 serving cells.

As one subsidiary embodiment of this sub-embodiment, one of the K1 candidate cells is configured for at least two of the K1 serving cells.

As one subsidiary embodiment of this sub-embodiment, one of the K1 candidate cells is a candidate cell of at least two of the K1 serving cells.

As one sub-embodiment of this embodiment, the K1 candidate configurations are respectively configured for the K1 serving cells.

As one subsidiary embodiment of this sub-embodiment, one candidate cell in the K1 candidate configurations is configured for only one of the K1 serving cells.

As one subsidiary embodiment of this sub-embodiment, the K1 candidate cells are respectively candidate cells of the K1 serving cells.

As one subsidiary embodiment of this sub-embodiment, one of the K1 candidate cells is a candidate cell of one of the K1 serving cells.

As one subsidiary embodiment of this sub-embodiment, the K1 candidate cells correspond to the K1 serving cells in a one-to-one manner.

As one subsidiary embodiment of this sub-embodiment, any of the K1 candidate cells is a candidate cell of one of the K1 serving cells, and any candidate cell is not a candidate cell of any serving cell other than the one of the K1 serving cells.

As one embodiment, the behavior to be along with the first signaling comprises: once the first signaling is received.

As one embodiment, the behavior to be along with the first signaling comprises: when the first signaling is received.

As one embodiment, the behavior to be along with the first signaling comprises: if the first signaling is received.

As one embodiment, the behavior to apply at least one of the K1 candidate configurations is independent of the channel measurement after the first signaling is received.

As one embodiment, the behavior to apply at least one of the K1 candidate configurations comprises: applying all of the K1 candidate configurations.

As one embodiment, the behavior to apply at least one of the K1 candidate configurations comprises: applying parts of the K1 candidate configurations.

As one embodiment, the behavior to apply at least of the K1 candidate configurations comprises: applying each of the K1 candidate configurations.

As one embodiment, the behavior to apply at least one of the K1 candidate configurations comprises: applying only one of the K1 candidate configurations.

As one sub-embodiment of this embodiment, before applying the one of the K1 candidate configurations, one candidate cell is determined among the K1 candidate cells, and the one candidate configuration is configured for the one candidate cell.

As one embodiment, the behavior to apply at least one of the K1 candidate configurations comprises: applying at least 2 of the K1 candidate configurations.

As one sub-embodiment of this embodiment, before applying the at least 2 of the K1 candidate configurations, at least 2 candidate cells are determined among the K1 candidate cells, and the at least 2 candidate configurations are respectively configured for the at least 2 candidate cells.

As one sub-embodiment of this embodiment, the at least 2 are not less than 2.

As one sub-embodiment of this embodiment, the at least 2 are 2.

As one sub-embodiment of this embodiment, the at least 2 are greater than 2.

As one embodiment, the phrase of the first signaling being used for mobility control means: the first signaling is used for Handover (HO).

As one embodiment, the phrase of the first signaling being used for mobility control means: the first signaling is used for L3 (Layer 3) triggered mobility control.

As one embodiment, the phrase of the first signaling being used for mobility control means: the first signaling is used for LTM.

As one embodiment, the phrase of the first signaling being used for mobility control means: the first signaling is used for Cell Switch.

As one embodiment, the phrase of the first signaling being used for mobility control means: the first signaling is used for Beam Management.

As one embodiment, the K1 candidate configurations correspond to the K1 candidate cells in a one-to-one manner.

As one embodiment, the K1 candidate configurations respectively comprise configuration information of the K1 candidate cells.

As one embodiment, the K1 candidate configurations are respectively the configuration information of the K1 candidate cells.

As one embodiment, each of the K1 candidate configurations is a candidate configuration of one of the K1 candidate cells.

As one embodiment, each of the K1 candidate configurations comprises the candidate information of one of the K1 candidate cells.

As one embodiment, one candidate configuration is the configuration information of one candidate cell.

As one embodiment, one candidate configuration corresponds to one candidate cell.

As one embodiment, one candidate configuration is configured for one serving cell.

As one embodiment, one candidate configuration is configured for a plurality of serving cells.

As one embodiment, one candidate configuration is configured for at least one serving cell.

As one embodiment, one candidate configuration comprises the configuration information of the candidate cell corresponding to the one candidate configuration.

As one embodiment, one candidate configuration comprises a candidate cell identifier corresponding to the one candidate configuration.

As one embodiment, one candidate configuration comprises one candidate configuration identifier.

As one embodiment, one candidate configuration is indexed by one candidate configuration identifier.

As one embodiment, one candidate configuration comprises configuration information of a physical layer of the candidate cell corresponding to the one candidate configuration.

As one embodiment, one candidate configuration comprises a downlink common configuration of the candidate cell corresponding to the one candidate configuration.

As one embodiment, one candidate configuration comprises an uplink common configuration of the candidate cell corresponding to the one candidate configuration.

As one embodiment, one candidate configuration comprises an SSB configuration of the candidate cell corresponding to the one candidate configuration.

As one embodiment, one candidate configuration comprises configuration information of an initial downlink BWP of the candidate cell corresponding to the one candidate configuration.

As one embodiment, one candidate configuration comprises configuration information of an initial uplink BWP of the candidate cell corresponding to the one candidate configuration.

As one embodiment, one candidate configuration comprises PDCCH configuration information on the initial downlink BWP of the candidate cell corresponding to the one candidate configuration.

As one embodiment, one candidate configuration comprises PDSCH configuration information on the initial downlink BWP of the candidate cell corresponding to the one candidate configuration.

As one embodiment, one candidate configuration comprises PUCCH configuration information on the initial uplink BWP of the candidate cell corresponding to the one candidate configuration.

As one embodiment, one candidate configuration comprises PRACH configuration information on the initial uplink BWP of the candidate cell corresponding to the one candidate configuration.

As one embodiment, one candidate configuration comprises PUSCH configuration information on the initial uplink BWP of the candidate cell corresponding to the one candidate configuration.

As one embodiment, a first variable is used for storing the candidate configuration.

As one embodiment, the first variable is used for storing the K1 candidate configurations.

As one embodiment, the K1 candidate configurations are candidate configurations in the first variable.

As one embodiment, when the first signaling is received, the first variable comprises the K1 candidate configurations.

As one embodiment, each of the K1 candidate configurations comprises candidate information of one of the K1 candidate cells.

As one embodiment, any two of the K1 candidate cells are two different candidate cells.

As one embodiment, the first signaling is received to be used for triggering the behavior to apply at least one of the K1 candidate configurations.

As one embodiment, the first signaling comprises at least K1 candidate cell information blocks, and each of the K1 candidate cell information blocks indicates one of the K1 candidate cells.

As one sub-embodiment of this embodiment, the first signaling consists of the K1 candidate cell information blocks.

As one sub-embodiment of this embodiment, the first signaling comprises at least one domain other than the K1 candidate cell information blocks.

As one sub-embodiment of this embodiment, the first signaling consists of the K1 candidate cell information blocks and one serving cell identifier field, and the one serving cell identifier field indicates the first serving cell.

As one sub-embodiment of this embodiment, the first signaling comprises at least one domain other than the K1 candidate cell information blocks and the one serving cell identifier field.

As one sub-embodiment of this embodiment, the first signaling consists of the K1 candidate cell information blocks and a first bitmap.

As one sub-embodiment of this embodiment, the first signaling comprises at least one domain other than the K1 candidate cell information blocks and the first bitmap.

As one sub-embodiment of this embodiment, any two of the K1 candidate cell information blocks have the same format.

As one sub-embodiment of this embodiment, any two of the K1 candidate cell information blocks occupy the same number of bits.

As one sub-embodiment of this embodiment, any two of the K1 candidate cell information blocks comprise the same number of MAC fields.

As one sub-embodiment of this embodiment, one candidate cell information block corresponds to one candidate cell.

As one sub-embodiment of this embodiment, one candidate cell information block occupies a positive integer number of bits.

As one sub-embodiment of this embodiment, one candidate cell information block occupies a positive integer number of consecutive octets.

As one sub-embodiment of this embodiment, one candidate cell information block comprises one MAC field indicating C-RNTI of the first node in a corresponding candidate cell.

As one sub-embodiment of this embodiment, one candidate cell information block comprises one MAC field indicating whether the corresponding candidate cell is configured to be free of random access.

As one sub-embodiment of this embodiment, one candidate cell information block comprises one MAC field indicating CFRA (Contention Free Random Access) resources of the corresponding candidate cell.

As one sub-embodiment of this embodiment, one candidate cell information block comprises one MAC field indicating a TAG (Timing Advance Group) to which the corresponding candidate cell belongs.

As one sub-embodiment of this embodiment, one candidate cell information block comprises a configuration index of one candidate cell.

As one sub-embodiment of this embodiment, one candidate cell information block comprises a configuration index of one candidate cell.

### Embodiment 2

Embodiment 2 illustrates a schematic diagram of a network architecture according to one embodiment of the present application, as shown in FIG. 2. FIG. 2 illustrates a network architecture 200 of a 5G NR (New Radio)/LTE (Long-Term Evolution)/LTE-A (Long-Term Evolution Advanced) system. The 5G NR/LTE/LTE-A network architecture 200 may be referred to as a 5GS (5G System)/EPS (Evolved Packet System) 200 or some other suitable terms. The 5GS/EPS 200 comprises at least one of UE (User Equipment) 201, a RAN (Radio Access Network) 202, a 5GC (5G Core Network)/EPC (Evolved Packet Core) 210, an HSS (Home Subscriber Server)/UDM (Unified Data Management) 220, and an Internet service 230. 5GS/EPS can be interconnected with other access networks, but for simplicity, these entities/interfaces are not shown. As shown, the 5GS/EPS provides packet-switched services, but those skilled in the art will readily appreciate that various concepts presented throughout the present application may be extended to a network providing a circuit-switched service or other cellular networks. RAN comprises a source node 203 and other nodes 204. The node 203 provides user and control plane protocol termination towards UE201. The node 203 can be connected to other nodes 204 via an Xn interface (e.g., backhaul)/X2 interface. The node 203 may also be referred to as a base station, a base transceiving station, a radio base station, a radio transceiver, a transceiver function, a basic service set (BSS), an extended service set (ESS), a TRP (Transmitter Receiver Point), or some other suitable terms. The node 203 provides an access point to 5GC/EPC210 for UE201. Examples of UE201 comprises a cellular phone, a smart phone, a session initiation protocol (SIP) phone, a laptop, a personal digital assistant (PDA), a satellite radio, a non-terrestrial base station communication, a satellite mobile communication, a global positioning system, a multimedia device, a video device, a digital audio player (for example, an MP3 player), a camera, a game console, a drone, an aircraft, a narrowband Internet of Things device, a machine type communication device, a land vehicle, an automobile, a wearable device, or any other similarly functional device. Those skilled in the art may also call the UE201 as a mobile station, a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or some other suitable terms. The node 203 is connected to 5GC/EPC210 by an S1/NG interface. 5GC/EPC210 comprises an MME (Mobility Management Entity)/AMF (Authentication Management Field)/SMF (Session Management Function) 211, other MNM/AMF/SMF214, an S-GW (Service Gateway)/UPF (User Plane Function) 212, and a P-GW (Packet Data Network Gateway)/UPF213. The MME/AMF/SMF211 is a control node that processes signaling between UE201 and 5GC/EPC210. Generally, the MME/AMF/SMF211 provides bearer and connection management. All user IP (Internet Protocol) packets are communicated by the S-GW/UPF212, and the S-GW/UPF212 is connected to the P-GW/UPF213. The P-GW provides UE IP address allocation and other functions. The P-GW/UPF213 is connected to the Internet service 230. The Internet service 230 comprises an Internet protocol service corresponding to an operator, and may specifically comprise the Internet, an intranet, an IMS (IP Multimedia Subsystem) and a packet switching streaming service.

As one embodiment, the UE201 corresponds to the first node in the present application.

As one embodiment, the UE201 is one piece of User Equipment (UE).

As one embodiment, the node 203 corresponds to the second node in the present application.

As one embodiment, the node 203 is one piece of base station equipment (BaseStation, BS).

As one embodiment, the node 203 is one Base Transceiver Station (BTS).

As one embodiment, the node 203 is one node B (NodeB, NB).

As one embodiment, the node 203 is one gNB.

As one embodiment, the node 203 is one eNB.

As one embodiment, the node 203 is one ng-eNB.

As one embodiment, the node 203 is one en-gNB.

As one embodiment, the node 203 is one CU (Centralized Unit).

As one embodiment, the node 203 is one DU (Distributed Unit).

As one embodiment, the node 203 is user equipment.

As one embodiment, the node 203 is one relay.

As one embodiment, the node 203 is a Gateway.

As one embodiment, the node 204 corresponds to a third node in the present application.

As one embodiment, the node 204 is one BS.

As one embodiment, the node 204 is one BTS.

As one embodiment, the node 204 is one NB.

As one embodiment, the node 204 is one gNB.

As one embodiment, the node 204 is one eNB.

As one embodiment, the node 204 is one ng-eNB.

As one embodiment, the node 204 is one en-gNB.

As one embodiment, the node 204 is user equipment.

As one embodiment, the node 204 is one relay.

As one embodiment, the node 204 is a Gateway.

As one embodiment, the node 204 is one CU.

As one embodiment, the node 204 is one DU.

As one embodiment, the node 203 and the node 204 are connected by an ideal backhaul.

As one embodiment, the node 203 and the node 204 are connected by a non-ideal backhaul.

As one embodiment, the node 203 and the node 204 simultaneously provide radio resources for the UE201.

As one embodiment, the node 203 and the node 204 do not simultaneously provide radio resources for the UE201.

As one embodiment, the node 203 and the node 204 are the same node.

As one embodiment, the node 203 and the node 204 are two different nodes.

As one embodiment, the node 203 and the node 204 belong to the same one CU.

As one embodiment, the node 203 and the node 204 belong to two different CUs.

As one embodiment, the user equipment supports a transmission in a terrestrial network.

As one embodiment, the user equipment supports a transmission in a Non-Terrestrial Network (NTN).

As one embodiment, the user equipment supports a transmission in a large delay difference network.

As one embodiment, the user equipment supports a Dual Connection (DC) transmission.

As one embodiment, the user equipment comprises an aircraft.

As one embodiment, the user equipment comprises a vehicle terminal.

As one embodiment, the user equipment comprises a ship.

As one embodiment, the user equipment comprises an Internet of Things terminal.

As one embodiment, the user equipment comprises an industrial Internet of Things terminal.

As one embodiment, the user equipment comprises a device that supports a low-delay and high-reliability transmission.

As one embodiment, the user equipment comprises a test device.

As one embodiment, the user equipment comprises a signaling tester.

As one embodiment, the base station equipment supports the transmission in the non-terrestrial network.

As one embodiment, the base station equipment supports the transmission in the large delay difference network.

As one embodiment, the base station equipment supports the transmission in the terrestrial network.

As one embodiment, the base station equipment comprises a Macro Cellular base station.

As one embodiment, the base station equipment comprises a Micro Cell base station.

As one embodiment, the base station equipment comprises a Pico Cell base station.

As one embodiment, the base station equipment comprises a Femtocell.

As one embodiment, the base station equipment comprises base station equipment that supports a large delay difference.

As one embodiment, the base station equipment comprises a flight platform device.

As one embodiment, the base station equipment comprises a satellite device.

As one embodiment, the base station equipment comprises a TRP (Transmitter Receiver Point).

As one embodiment, the base station equipment comprises a CU (Centralized Unit).

As one embodiment, the base station equipment comprises a DU (Distributed Unit).

As one embodiment, the base station equipment comprises a test device.

As one embodiment, the base station equipment comprises a signaling tester.

As one embodiment, the base station equipment comprises an IAB (Integrated Access and Backhaul)-node.

As one embodiment, the base station equipment comprises an IAB-donor.

As one embodiment, the base station equipment comprises an IAB-donor-CU.

As one embodiment, the base station equipment comprises an IAB-donor-DU.

As one embodiment, the base station equipment comprises an IAB-DU.

As one embodiment, the base station equipment comprises an IAB-MT.

As one embodiment, the relay comprises a relay.

As one embodiment, the relay comprises an L3 relay.

As one embodiment, the relay comprises an L2 relay.

As one embodiment, the relay comprises a router.

As one embodiment, the relay comprises a switch.

As one embodiment, the relay comprises user equipment.

As one embodiment, the relay comprises base station equipment.

### Embodiment 3

Embodiment 3 shows a schematic diagram of an embodiment of radio protocol architectures for one user plane and one control plane according to the present application, as shown in FIG. 3. FIG. 3 is a schematic diagram illustrating an embodiment of a radio protocol architecture for a user plane 350 and a control plane 300, and FIG. 3 shows the radio protocol architecture for the control plane 300 by using three layers: layer 1, layer 2, and layer 3. The layer 1 (L1 layer) is the lowest layer and implements various PHY (physical layer) signal processing functions. The L1 layer will be herein referred to as PHY301. The layer 2 (L2 layer) 305 is on the PHY301 and comprises a MAC (Medium Access Control) sub-layer 302, an RLC (Radio Link Control) sub-layer 303, and a PDCP (Packet Data Convergence Protocol) sub-layer 304. The PDCP sub-layer 304 provides multiplexing between different radio bearer and logical channels. The PDCP sub-layer 304 also provides security by encrypting data packets and provides zone-crossing mobility support. The RLC sub-layer 303 provides segmentation and reassembly of upper-layer packets, retransmission of lost data packets, and reordering of data packets to compensate for unordered reception caused by a HARQ (Hybrid Automatic Repeat Request). The MAC sub-layer 302 provides multiplexing between logical and transmission channels. The MAC sub-layer 302 is also responsible for allocating various radio resources (e.g., resource blocks) in one cell. The MAC sub-layer 302 is also responsible for HARQ operations. The RRC (Radio Resource Control) sub-layer 306 in the layer 3 (L3 layer) in the control plane 300 is responsible for obtaining radio resources (i.e., radio bearers) and configuring lower layers by using RRC signaling. The radio protocol architecture for the user plane 350 comprises a layer 1 (L1 layer) and a layer 2 (L2 layer). The radio protocol architecture in the user plane 350 for the physical layer 351, the PDCP sub-layer 354 in the L2 layer 355, the RLC sub-layer 353 in the L2 layer 355, and the MAC sub-layer 352 in the L2 layer 355 is substantially the same as that in the control plane 300 for the corresponding layers and sub-layers, but the PDCP sub-layer 354 also provides header compression for upper-layer data packets to reduce radio transmission overhead. The L2 layer 355 in the user plane 350 further comprises an SDAP (Service Data Adaptation Protocol) sub-layer 356, and the SDAP sub-layer 356 is responsible for mapping between a QoS stream and a data radio bearer (DRB) to support the diversity of services.

As one embodiment, the radio protocol architecture in FIG. 3 is applicable to the first node in the present application.

As one embodiment, the radio protocol architecture in FIG. 3 is applicable to the second node in the present application.

As one embodiment, the first signaling in the present application is generated in the RRC306.

As one embodiment, the first signaling in the present application is generated in the MAC302 or the MAC352.

As one embodiment, the first signaling in the present application is generated in the PHY301 or the PHY351.

As one embodiment, the second signaling in the present application is generated in the RRC306.

As one embodiment, the third signaling in the present application is generated in the MAC302 or the MAC352.

As one embodiment, the third signaling in the present application is generated in the PHY301 or the PHY351.

As one embodiment, the fourth signaling in the present application is generated in the RRC306.

As one embodiment, the fourth signaling in the present application is generated in the MAC302 or the MAC352.

As one embodiment, the fourth signaling in the present application is generated in the PHY301 or the PHY351.

### Embodiment 4

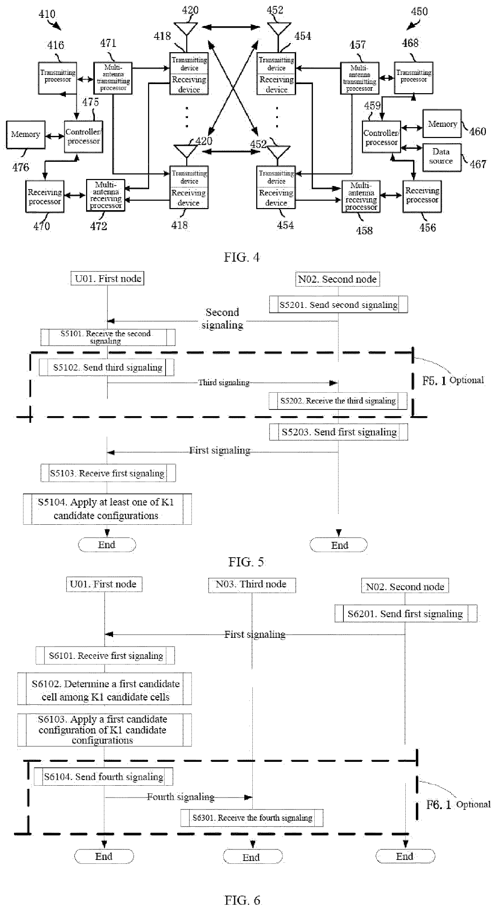

Embodiment 4 shows a schematic diagram of a first communication device and a second communication device according to the present application, as shown in FIG. 4. FIG. 4 is a block diagram of a first communication device 450 and a second communication device 410 communicating with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454 and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In the transmission from the second communication device 410 to the first communication device 450, at the second communication device 410, an upper-layer data packet from a core network is provided to the controller/processor 475. The controller/processor 475 implements the functionality of the L2 layer. In the transmission from the second communication device 410 to the first communication device 450, the controller/processor 475 provides header compression, encryption, packet segmentation and reordering, multiplexing between logical and transport channels, and radio resource allocation to the first communication device 450 based on various priority metrics. The controller/processor 475 is also responsible for retransmission of a lost packet, and for signaling to the first communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 410, as well as mapping of signal constellations based on various modulation schemes (for example, binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding (comprising codebook-based precoding and non-codebook-based precoding) and beamforming processing on the coded and modulated symbols to generate one or more spatial streams. The transmitting processor 416 then maps each spatial stream to a subcarrier, multiplexes with a reference signal (for example, a pilot frequency) in a time domain and/or frequency domain, and subsequently uses an inverse fast Fourier transform (IFFT) to generate a physical channel carrying a time-domain multi-carrier symbol stream. Subsequently, the multi-antenna transmitting processor 471 performs a sending analog precoding/beamforming operation on the time-domain multi-carrier symbol stream. Each transmitting device 418 converts a baseband multi-carrier symbol stream provided by the multi-antenna transmitting processor 471 into a radio frequency stream, which is subsequently provided to a different antenna 420.

In the transmission from the second communication device 410 to the first communication device 450, at the first communication device 450, each receiving device 454 receives a signal by a corresponding antenna 452 thereof. Each receiving device 454 recovers the information modulated onto the RF carrier and converts the RF stream into the baseband multi-carrier symbol stream to be provided to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses a fast Fourier transform (FFT) to convert the baseband multi-carrier symbol stream after the receiving analog precoding/beamforming operation from the time domain to the frequency domain. In the frequency domain, a physical layer data signal and the reference signal are demultiplexed by the receiving processor 456, wherein the reference signal will be used for channel estimation, and the data signal is subjected to multi-antenna detection in the multi-antenna receiving processor 458 to recover any spatial stream with the first communication device 450 as the destination. The symbols on each spatial stream are demodulated and recovered in the receiving processor 456, and a soft decision is generated. Subsequently, the receiving processor 456 decodes and deinterleaves the soft decision to recover the upper-layer data and a control signal transmitted by the second communication device 410 on the physical channel. Subsequently, the upper-layer data and the control signal are provided to the controller/processor 459. The controller/processor 459 implements the functions of the L2 layer. The controller/processor 459 may be associated with a memory 460 storing program codes and data. The memory 460 may be referred to as a computer-readable medium. In the transmission from the second communication device 410 to the first communication device 450, the controller/processor 459 provides demultiplexing between transport and logical channels, packet reassembly, decryption, header decompression, and control signal processing to recover the upper-layer data packet from the core network. Subsequently, the upper-layer data packet is provided to all protocol layers above the L2 layer. Various control signals may also be provided to an L3 for L3 processing.

In the transmission from the first communication device 450 to the second communication device 410, at the first communication device 450, a data source 467 is used for providing the upper-layer data packet to the controller/processor 459. The data source 467 represents all protocol layers above the L2 layer. Similar to the sending function at the second communication device 410 described in the transmission from the second communication device 410 to the first communication device 450, the controller/processor 459 implements header compression, encryption, packet segmentation and reordering, and multiplexing between logical and transport channels based on radio resource allocation, and implements L2 layer functions for the user plane and the control plane. The controller/processor 459 is also responsible for the retransmission of the lost packet, and for signaling to the second communication device 410. The transmitting processor 468 performs modulation mapping and channel coding processing, and the multi-antenna transmitting processor 457 performs digital multi-antenna spatial precoding (comprising codebook-based precoding and non-codebook-based precoding) and beamforming processing. Subsequently, the transmitting processor 468 modulates the generated spatial stream into a multi-carrier/single-carrier symbol stream, which is provided to a different antenna 452 via the transmitting device 454 after an analog precoding/beamforming operation in the multi-antenna transmitting processor 457. Each transmitting device 454 first converts the baseband symbol stream provided by the multi-antenna transmitting processor 457 into a radio frequency symbol stream, which is then provided to the antenna 452.

In the transmission from the first communication device 450 to the second communication device 410, the function at the second communication device 410 is similar to the receiving function at the first communication device 450 described in the transmission from the second communication device 410 to the first communication device 450. Each receiving device 418 receives a radio frequency signal by a corresponding antenna 420 thereof, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the L2 layer functions. The controller/processor 475 may be associated with a memory 476 storing program codes and data. The memory 476 may be referred to as a computer-readable medium. In the transmission from the first communication device 450 to the second communication device 410, the controller/processor 475 provides demultiplexing between transport and logical channels, packet reassembly, decryption, header decompression, and control signal processing to recover the upper-layer data packet from the UE450. The upper-layer data packet from the controller/processor 475 can be provided to the core network.

As one embodiment, the first communication device 450 comprises: at least one processor and at least one memory, wherein the at least one memory comprises a computer program code; and the at least one memory and the computer program code are configured to be used with the at least one processor, and the first communication device 450 at least: receives first signaling, wherein the first signaling indicates K1 candidate cells, which are at least configured for a first serving cell, K1 being an integer greater than 1; and applying at least one of K1 candidate configurations along with the first signaling, wherein the first signaling is used for mobility control; the K1 candidate configurations respectively correspond to the K1 candidate cells; each of the K1 candidate configurations comprises a candidate cell identifier of one of the K1 candidate cells, and the candidate cell identifiers of any two of the K1 candidate cells are different; and the first signaling is used for triggering a behavior to apply at least one of the K1 candidate configurations.

As one embodiment, the first communication device 450 comprises: a memory storing a computer-readable instruction program, wherein the computer-readable instruction program generates actions when executed by at least one processor, and the action comprises: receiving first signaling, the first signaling indicating K1 candidate cells, which are at least configured for the first serving cell, K1 being an integer greater than 1; and applying at least one of K1 candidate configurations along with the first signaling, wherein the first signaling is used for mobility control; the K1 candidate configurations respectively correspond to the K1 candidate cells; each of the K1 candidate configurations comprises a candidate cell identifier of one of the K1 candidate cells, and the candidate cell identifiers of any two of the K1 candidate cells are different; and the first signaling is used for triggering a behavior to apply at least one of the K1 candidate configurations.

As one embodiment, the second communication device 410 comprises: at least one processor and at least one memory, wherein the at least one memory comprises a computer program code; and the at least one memory and the computer program code are configured to be used with the at least one processor. The second communication device 410 at least: sends first signaling, the first signaling indicating K1 candidate cells, which are at least configured for the first serving cell, and K1 being an integer greater than 1, wherein at least one of K1 candidate configurations is applied along with the first signaling; the first signaling is used for mobility control; the K1 candidate configurations respectively correspond to the K1 candidate cells; each of the K1 candidate configurations comprises a candidate cell identifier of one of the K1 candidate cells, and the candidate cell identifiers of any two of the K1 candidate cells are different; and the first signaling is used for triggering a behavior to apply at least one of the K1 candidate configurations.

As one embodiment, the second communication device 410 comprises: a memory storing a computer-readable instruction program, wherein the computer-readable instruction program generates actions when executed by at least one processor, and the actions comprise: sending first signaling, the first signaling indicating K1 candidate cells, which are at least configured for the first serving cell, and K1 being an integer greater than 1, wherein at least one of K1 candidate configurations is applied along with the first signaling; the first signaling is used for mobility control; the K1 candidate configurations respectively correspond to the K1 candidate cells; each of the K1 candidate configurations comprises a candidate cell identifier of one of the K1 candidate cells, and the candidate cell identifiers of any two of the K1 candidate cells are different; and the first signaling is used for triggering a behavior to apply at least one of the K1 candidate configurations.

As one embodiment, at least one of the antenna 452, the receiving device 454, the receiving processor 456, and the controller/processor 459 is used for receiving the first signaling.

As one embodiment, at least one of the antenna 420, the transmitting device 418, the transmitting processor 416, and the controller/processor 475 is used for sending the first signaling.

As one embodiment, at least one of the antenna 452, the receiving device 454, the receiving processor 456, and the controller/processor 459 is used for receiving second signaling.

As one embodiment, at least one of the antenna 420, the transmitting device 418, the transmitting processor 416, and the controller/processor 475 is used for sending the second signaling.

As one embodiment, at least one of the antenna 452, the transmitting device 454, the transmitting processor 468, and the controller/processor 459 is used for sending third signaling.

As one embodiment, at least one of the antenna 420, the receiving device 418, the receiving processor 470, and the controller/processor 475 is used for receiving the third signaling.

As one embodiment, at least one of the antenna 452, the transmitting device 454, the transmitting processor 468, and the controller/processor 459 is used for sending fourth signaling.

As one embodiment, at least one of the antenna 420, the receiving device 418, the receiving processor 470, and the controller/processor 475 is used for receiving the fourth signaling.

As one embodiment, the first communication device 450 corresponds to the first node in the present application.

As one embodiment, the second communication device 410 corresponds to the second node in the present application.

As one embodiment, the first communication device 450 is one piece of user equipment.

As one embodiment, the first communication device 450 is one piece of base station equipment.

As one embodiment, the first communication device 450 is one piece of relay equipment.

As one embodiment, the second communication device 410 is one piece of user equipment.

As one embodiment, the second communication device 410 is one piece of base station equipment.

As one embodiment, the second communication device 410 is one piece of relay equipment.

### Embodiment 5

Embodiment 5 illustrates a radio signal transmission flow chart according to one embodiment of the present application, as shown in FIG. 5. It is particularly explained that the order in the present example does not limit the signal transmission order and the implementation order in the present application.

For **a first node U01,** in step S5101, second signaling is received, wherein the second signaling is used for determining K2 candidate configurations; in step S5102, third signaling is sent, wherein the third signaling indicates measurement results of at least the K1 candidate cells; in step S5103, first signaling is received, wherein the first signaling indicates the K1 candidate cells, and the K1 candidate cells are at least configured for a first serving cell, K1 being an integer greater than 1; and in step S5104, at least one candidate configuration of the K1 candidate configurations is applied along with the first signaling.

For **a second node N02,** in step S5201, the second signaling is sent; in step S5202, the third signaling is received; and in step S5203, the first signaling is sent.

In Embodiment 5, the first signaling is used for mobility control; the K1 candidate configurations respectively correspond to the K1 candidate cells; each of the K1 candidate configurations comprises a candidate cell identifier of one of the K1 candidate cells, and the candidate cell identifiers of any two of the K1 candidate cells are different; and the first signaling is used for triggering a behavior to apply at least one of the K1 candidate configurations; the second signaling is RRC sub-layer signaling; each of the K1 candidate configurations is one of the K2 candidate configurations; and K1 is not greater than the K2; the third signaling is signaling under the RRC sub-layer; and the third signaling is used for triggering the first signaling.

As one embodiment, the first node U01 is one piece of user equipment.

As one embodiment, the first node U01 is one piece of base station equipment.

As one embodiment, the first node U01 is one piece of relay equipment.

As one embodiment, the second node N02 is one piece of base station equipment.

As one embodiment, the second node N02 is one piece of user equipment.

As one embodiment, the second node N02 is one piece of relay equipment.

As one embodiment, the first node U01 is one piece of user equipment and the second node N02 is one piece of base station equipment.

As one embodiment, the first node U01 is one piece of user equipment and the second node N02 is one piece of relay equipment.

As one embodiment, the first node U01 is one piece of user equipment and the second node N02 is one piece of user equipment.

As one embodiment, the first node U01 is one piece of base station equipment, and the second node N02 is one piece of base station equipment.

As one embodiment, the first node U01 is one piece of relay equipment, and the second node N02 is one piece of base station equipment.

As one embodiment, the second node N02 is the maintenance base station of the first serving cell.

As one embodiment, the second node N02 is the maintenance base station of any serving cell of the first node U01.

As one embodiment, the second signaling comprises at least one RRC message, and each of the at least one RRC message indicates at least one of the K2 candidate configurations.

As one embodiment, the second signaling is one RRC message, and the one RRC message indicates the K2 candidate configurations.

As one embodiment, the second signaling comprises at least one RRC IE (Information Element).

As one embodiment, the second signaling comprises at least one RRC Field.

As one embodiment, the second signaling is transmitted by a DCCH (Dedicated Control Channel).

As one embodiment, the second signaling is transmitted by SRB 1 (Signaling radio bearer 1).

As one embodiment, the second signaling is transmitted by SRB3 (Signaling radio bearer 3).

As one embodiment, the second signaling comprises an RRCReconfiguration message.

As one embodiment, the second signaling comprises an RRCResume message.

As one embodiment, the second signaling comprises an RRCReestablishment message.

As one embodiment, the second signaling comprises a CellGroupConfig field.

As one embodiment, the second signaling comprises an SpCellConfig field.

As one embodiment, the second signaling comprises a reconfigurationWithSync field.

As one embodiment, the second signaling comprises an spCellConfigCommon field.

As one embodiment, the second signaling comprises a ServingCellConfigCommon IE for each candidate cell.

As one embodiment, the second signaling comprises a DownlinkConfigCommon IE for each candidate cell.

As one embodiment, the second signaling comprises an UplinkConfigCommon IE for each candidate cell.

As one embodiment, the second signaling comprises a BWP-DownlinkCommon IE for each candidate cell.

As one embodiment, the second signaling comprises a BWP-UplinkCommon IE for each candidate cell.

As one embodiment, the second signaling comprises an ssb-PositionsInBurst field for each candidate cell.

As one embodiment, the first signaling indicates the K1 of the K2 candidate configurations.

As one embodiment, a sender of the second signaling is the maintaining base station of one serving cell of the first node U01.

As one embodiment, the sender of the second signaling is the maintaining base station of the first serving cell.

As one embodiment, the sender of the second signaling is the maintenance base station of one serving cell other than the first serving cell of the first node U01.

As one embodiment, the second signaling indicates the K2 candidate configurations.

As one embodiment, the second signaling comprises the K2 candidate configurations.

As one embodiment, the K2 candidate configurations are determined by the second signaling.

As one embodiment, at least one of the K2 candidate configurations is not configured for the first serving cell.

As one embodiment, at least the K1 of the K2 candidate configurations are configured for the first serving cell.

As one embodiment, only the K1 of the K2 candidate configurations are configured for the first serving cell.

As one embodiment, any of the K2 candidate configurations is configured for the first serving cell.

As one embodiment, at least one of the K2 candidate configurations is configured for the first serving cell and one serving cell other than the first serving cell.

As one embodiment, the K2 candidate configurations are configured for a plurality of serving cells of the first node U01, and the first serving cell is one of the plurality of serving cells.

As one embodiment, the K2 candidate configurations are only configured for the first serving cell.

As one embodiment, the K2 candidate configurations are configured for the first serving cell, and any of the K2 candidate configurations is not configured for any serving cell other than the first serving cell.

As one embodiment, the K2 candidate configurations belong to the same one RRC message.

As one embodiment, at least two of the K2 candidate configurations belong to different RRC messages.

As one embodiment, K2 is not greater than one threshold value, and the one threshold value is predefined.

As one embodiment, K2 is not less than 2.

As one embodiment, the second signaling and the first signaling belong to the same one RRC message; and K2 is K1.

As one sub-embodiment of this embodiment, the step S5101 and the step S5104 are the same one step.

As one sub-embodiment of this embodiment, the K1 candidate configurations are the K2 candidate configurations.

As one sub-embodiment of this embodiment, the first signaling belongs to the second signaling.

As one sub-embodiment of this embodiment, the first signaling is the second signaling.

As one embodiment, the second signaling comprises at least one RRC message, and the first signaling is the signaling under the RRC sub-layer.

As one sub-embodiment of this embodiment, the step S5101 is prior to the step S5104.

As one sub-embodiment of this embodiment, the second signaling triggers the third signaling, and the third signaling triggers the first signaling.

As one sub-embodiment of this embodiment, a receiving moment of the second signaling is earlier than a receiving moment of the first signaling.

As one sub-embodiment of this embodiment, the first signaling is an MAC CE.

As one sub-embodiment of this embodiment, the first signaling is a DCI.

As one sub-embodiment of this embodiment, the second signaling comprises at least one first-class sub-signaling, and the first-class sub-signaling is used for adding or modifying the candidate configuration.

As one sub-embodiment of this embodiment, the name of each first-class sub-signaling comprises AddModList.

As one sub-embodiment of this embodiment, the name of each first-class sub-signaling comprises AddModList-r18.

As one sub-embodiment of this embodiment, each first-class sub-signaling indicates at least one candidate configuration.

As one sub-embodiment of this embodiment, in response to one piece of first-class sub-signaling being received, each candidate configuration indicated by the first-class sub-signaling is stored or updated in a first variable.

As one sub-embodiment of this embodiment, the second signaling comprises at least one piece of first-class sub-signaling and at least one piece of second-class sub-signaling, the first-class sub-signaling is used for adding or modifying the candidate configuration, and the second-class sub-signaling is used for removing the candidate configuration.

As one sub-embodiment of this embodiment, the name of each second-class sub-signaling comprises RemoveList.

As one sub-embodiment of this embodiment, the name of each second-class sub-signaling comprises RemoveList-r18.

As one sub-embodiment of this embodiment, each second-class sub-signaling indicates at least one candidate configuration.

As one sub-embodiment of this embodiment, in response to one piece of second-class sub-signaling being received, each candidate configuration indicated by the second-class sub-signaling is removed from the first variable.

As one sub-embodiment of this embodiment, the first variable is used for storing the K2 candidate configurations.

As one embodiment, the K1 candidate configurations are one subset of the K2 candidate configurations.

As one embodiment, the K1 candidate configurations are the K2 candidate configurations.

As one embodiment, K1 is equal to K2.

As one embodiment, K1 is less than K2.

As one embodiment, K1 and K2 are configurable.

As one embodiment, any of the K2 candidate cells is a candidate cell of at least one serving cell of the first node U01.

As one embodiment, any of the K2 candidate cells is the candidate cell of the first serving cell, and any of the K2 candidate cells is not a candidate cell of any serving cell other than the first serving cell of the first node U01.

As one embodiment, the dotted-line block F5.1 is optional.

As one embodiment, the dotted-line block F5.1 exists.

As one sub-embodiment of this embodiment, the second signaling comprises at least one RRC message, and the first signaling is the signaling under the RRC sub-layer.

As one sub-embodiment of this embodiment, the first signaling is an MAC CE.

As one sub-embodiment of this embodiment, the first signaling is a DCI.

As one sub-embodiment of this embodiment, the third signaling is received after the first signaling is sent.

As one sub-embodiment of this embodiment, the third signaling is one MAC CE.

As one sub-embodiment of this embodiment, the third signaling is one UCI (Uplink Control Information).

As one sub-embodiment of this embodiment, the third signaling is transmitted by a PUCCH (Physical Uplink Control Channel) resource.

As one sub-embodiment of this embodiment, the third signaling is transmitted by a PUSCH (Physical Uplink Shared Channel) resource.

As one sub-embodiment of this embodiment, in response to receiving the third signaling, the second node N02 sends the first signaling.

As one sub-embodiment of this embodiment, the second node N02 determines to send the first signaling according to the third signaling.

As one sub-embodiment of this embodiment, the third signaling comprises a measurement report.

As one sub-embodiment of this embodiment, the third signaling comprises an L1 measurement report.

As one sub-embodiment of this embodiment, the third signaling comprises an L1 or L2 measurement report.

As one sub-embodiment of this embodiment, the third signaling is the measurement report.

As one sub-embodiment of this embodiment, the third signaling is a measurement report used for LTM.

As one sub-embodiment of this embodiment, the third signaling is a CSI (Channel State Information) report.

As one sub-embodiment of this embodiment, the third signaling is an SP (Semi-Persistent) CSI report.

As one sub-embodiment of this embodiment, the third signaling comprises measurement results of the K1 candidate cells.

As one sub-embodiment of this embodiment, the third signaling only indicates the measurement results of the K1 candidate cells.

As one sub-embodiment of this embodiment, the third signaling indicates the measurement results of the K1 candidate cells, and the third signaling indicates a measurement result of at least one candidate cell other than the K1 candidate cells.

As one sub-embodiment of this embodiment, a measurement result of one candidate cell is a measurement result of a layer 1 (L1).

As one sub-embodiment of this embodiment, a measurement result of one candidate cell is a measurement result for at least one reference signal in the candidate cell.

As one sub-embodiment of this embodiment, at least one reference signal comprises one reference signal.

As one sub-embodiment of this embodiment, at least one reference signal comprises a plurality of reference signals.

As one sub-embodiment of this embodiment, at least one reference signal is one reference signal.

As one sub-embodiment of this embodiment, at least one reference signal is a plurality of reference signals.

As one sub-embodiment of this embodiment, each of at least one reference signal is a CSI-RS (Reference Signal).

As one sub-embodiment of this embodiment, each of at least one reference signal is an SSB (Synchronization Signal Block).

As one sub-embodiment of this embodiment, each of at least one reference signal is one of the CSI-RS or the SSB.

As one embodiment, a measurement result of one candidate cell is RSRP (Reference Signal Received Power).

As one sub-embodiment of this embodiment, the RSRP is L1-RSRP.

As one sub-embodiment of this embodiment, the RSRP is CSI-RSRP.

As one sub-embodiment of this embodiment, the RSRP is SS-RSRP.

As one sub-embodiment of this embodiment, a measurement result of one candidate cell is a RSRQ (Reference Signal Received Quality).

As one sub-embodiment of this embodiment, a measurement result of one candidate cell is a BLER (Block Error Ratio).

As one sub-embodiment of this embodiment, a measurement result of one candidate cell is related to at least one of RSRP or RSRQ or BLER.

As one embodiment, the dotted-line block F5.1 does not exist.

As one sub-embodiment of this embodiment, the second signaling and the first signaling belong to the same one RRC message; and K2 is K1.

As one sub-embodiment of this embodiment, at least one L3 measurement report is sent before the first signaling is received.

As one sub-embodiment of this embodiment, at least one L3 measurement report is used for triggering the first signaling.

As one sub-embodiment of this embodiment, one L3 measurement report is a MeasurementReport message.

As one sub-embodiment of this embodiment, the first signaling is an RRCReconfiguration message, the RRCReconfiguration message comprises one field with its name comprising masterCellGroup, the field with its name comprising masterCellGroup comprises K1 CellGroupConfig IEs, and the K1 CellGroupConfig IEs are respectively used for indicating the K1 candidate cells.

As one sub-embodiment of this embodiment, the first serving cell is a source PCell.

As one sub-embodiment of this embodiment, the K1 candidate cells are K1 target PCells.

As one sub-embodiment of this embodiment, the K1 candidate cells are configured for the first serving cell.

As one sub-embodiment of this embodiment, each of the K1 CellGroupConfig IEs comprises one SpCellConfig, each SpCellConfig comprises one ReconfigurationWithSync, each ReconfigurationWithSync comprises one ServingCellConfigCommon, each ServingCellConfigCommon comprises a candidate configuration of one candidate cell, each ServingCellConfigCommon comprises one PhysCellId, and each PhysCellId is a candidate cell identifier of one candidate cell.

### Embodiment 6

Embodiment 6 illustrates a radio signal transmission flow chart according to another embodiment of the present application, as shown in FIG. 6. It is particularly explained that the order in the present example does not limit the signal transmission order and the implementation order in the present application.

For **a first node U01,** in step S6101, first signaling is received, wherein the first signaling indicates K1 candidate cells, which are at least configured for a first serving cell, K1 being an integer greater than 1; in step S6102,, a first candidate cell is determined among the K1 candidate cells along with the first signaling; in step S6103, the first candidate configuration of the K1 candidate configurations is applied along with the first signaling; and in step S6104, in response to applying the at least one of the K1 candidate configurations, fourth signaling is sent.

For **a second node N02,** in step S6201, the first signaling is sent.

For **a third node N03,** in step S6301, fourth signaling is received.

In Embodiment 6, the first signaling is used for mobility control; the K1 candidate configurations respectively correspond to the K1 candidate cells; each of the K1 candidate configurations comprises a candidate cell identifier of one of the K1 candidate cells, and the candidate cell identifiers of any two of the K1 candidate cells are different; and the first signaling is used for triggering a behavior to apply at least one of the K1 candidate configurations; at least the first condition being satisfied is used for determining the first candidate cell among the K1 candidate cells; the first condition is independent of the measurement results of the K1 candidate cells; the K1 candidate configurations are configured for the first serving cell; and the first candidate configuration is one of the K1 candidate configurations; and the fourth signaling is used for indicating that the at least one of the K1 candidate configurations is applied.

As one embodiment, the first node U01 is one piece of user equipment, the second node N02 is one piece of base station equipment, and the third node N03 is one piece of base station equipment.

As one embodiment, the first node U01 is one piece of user equipment, the second node N02 is one piece of user equipment, and the third node N03 is piece of user equipment.

As one embodiment, the first node U01 is one piece of user equipment, the second node N02 is one piece of user equipment, and the third node N03 is one piece of base station equipment.

As one embodiment, the first node U01 is one piece of base station equipment, the second node N02 is one piece of base station equipment, and the third node N03 is one piece of base station equipment.

As one embodiment, the first node U01 is one piece of user equipment, the second node N02 is one piece of base station equipment, and the third node N03 is one piece of user equipment.

As one embodiment, the third node N03 is a maintenance base station of the first candidate cell.

As one embodiment, the third node N03 is a maintenance base station of one candidate cell in the K1 candidate configurations.

As one embodiment, the third node N03 is a maintenance base station of one candidate cell in the K1 candidate configurations that has completed the application.

As one embodiment, before applying the first candidate configuration, the first candidate cell is determined among the K1 candidate cells.

As one embodiment, the sentence that "the first candidate cell is determined among the K1 candidate cells" comprises: selecting the first candidate cell among the K1 candidate cells.

As one embodiment, the sentence that "the first candidate cell is determined among the K1 candidate cells" comprises: finding the first candidate cell among the K1 candidate cells.

As one embodiment, the sentence that "the first candidate cell is determined among the K1 candidate cells" comprises: taking the first candidate cell of the K1 candidate cells as a target cell of LTM.

As one embodiment, the sentence that "the first candidate cell is determined among the K1 candidate cells" comprises: determining the first candidate configuration in the K1 candidate configurations.

As one embodiment, the sentence that "the first candidate cell is determined among the K1 candidate cells" comprises: determining to apply the first candidate configuration of the K1 candidate configurations.

As one embodiment, the first candidate cell is determined according to the first condition among the K1 candidate cells.

As one embodiment, the first condition does not depend on measurement results of the K1 candidate cells.

As one embodiment, the first condition is related to a priority of the first candidate cell among the K1 candidate cells.

As one embodiment, the first condition is related to the first signaling.

As one embodiment, the first condition is related to a value of at least one domain in the first signaling.

As one embodiment, the first condition is related to whether the first candidate configuration comprises a complete configuration.

As one embodiment, the first condition is related to whether the first candidate configuration is valid.

As one embodiment, the first condition is related to whether the first candidate cell is configured to be free of random access.

As one embodiment, the first condition is related to whether a first timer is configured; and the first timer is used for determining whether uplink of the first candidate cell is time-aligned.

As one embodiment, the first condition is related to a running state of the first timer; and the first timer is used for determining whether uplink of the first candidate cell is time-aligned.

As one embodiment, the first condition comprises that the first candidate cell is one of the K1 candidate cells that has the highest priority.

As one sub-embodiment of this embodiment, the first timer is configured for determining that the first candidate cell is one of the K1 candidate cells that has the highest priority.

As one sub-embodiment of this embodiment, the first timer is running to be used for determining that the first candidate cell is one of the K1 candidate cells that has the highest priority.

As one sub-embodiment of this embodiment, the first candidate configuration comprises the complete configuration used for determining that the first candidate cell is one of the K1 candidate cells that has the highest priority.

As one sub-embodiment of this embodiment, the first candidate cell is configured to be free of random access for determining that the first candidate cell is one of the K1 candidate cells that has the highest priority.

As one sub-embodiment of this embodiment, the first candidate cell, which is one candidate cell headmost in order among the K1 candidate cells, is used for determining that the first candidate cell is one of the K1 candidate cells that has the highest priority.

As one sub-embodiment of this embodiment, the first signaling indicates an order of the K1 candidate cells.

As one sub-embodiment of this embodiment, the first signaling implicitly indicates the order of the K1 candidate cells.

As one sub-embodiment of this embodiment, the first signaling displays and indicates the order of the K1 candidate cells.

As one sub-embodiment of this embodiment, a position of a domain used for indicating the K1 candidate cells in the first signaling is used for determining the order of the K1 candidate cells.

As one sub-embodiment of this embodiment, one domain in the first signaling indicates that the first candidate cell is one candidate cell headmost in order among the K1 candidate cells.

As one sub-embodiment of this embodiment, a bit position of the domain used for indicating the first candidate cell in the first signaling is higher than a bit position of a domain used for indicating any candidate cell other than the first candidate cell in the first signaling, which is used for determining that the first candidate cell is one candidate cell headmost in order among the K1 candidate cells.

As one sub-embodiment of this embodiment, the bit position of the domain used for indicating the first candidate cell in the first signaling is lower than the bit position of the domain used for indicating any candidate cell other than the first candidate cell in the first signaling, which is used for determining that the first candidate cell is one candidate cell headmost in order among the K1 candidate cells.

As one embodiment, the first condition is independent of the first timer.

As one embodiment, when the first signaling is received, the first timer is running.

As one embodiment, when the first signaling is received, the first timer is not running.

As one embodiment, the first candidate configuration is the candidate configuration of the first candidate cell.

As one embodiment, the first candidate configuration comprises a candidate cell identifier of the first candidate cell.

As one embodiment, the first candidate configuration comprises the configuration information of the first candidate cell.

As one embodiment, the fourth signaling is an RRCReconfigurationComplete message; and the first signaling is one RRC message.

As one embodiment, the fourth signaling is the signaling under the RRC sub-layer; and the first signaling is the signaling under the RRC sub-layer.

As one sub-embodiment of this embodiment, the fourth signaling is one UCI.

As one sub-embodiment of this embodiment, the fourth signaling is one PUSCH.

As one sub-embodiment of this embodiment, the fourth signaling is one PUCCH.

As one sub-embodiment of this embodiment, the fourth signaling is one ACK (Acknowledgement).

As one embodiment, the phrase of "in response to applying at least one of the K1 candidate configurations" means: in response to applying one of the K1 candidate configurations.

As one sub-embodiment of this embodiment, the one of the K1 candidate configurations is any of the K1 candidate configurations.

As one sub-embodiment of this embodiment, the one of the K1 candidate configurations is the first candidate configuration of the K1 candidate configurations.

As one sub-embodiment of this embodiment, the phrase of "in response to applying one of the K1 candidate configurations" comprises: in response to one of the K1 candidate configurations completing to be applied.

As one embodiment, when at least one of the K1 candidate configurations begins to be applied, at least one of the K1 candidate configurations has not yet been applied.

As one embodiment, when at least one of the K1 candidate configurations begins to be applied, at least one of the K1 candidate configurations has not yet completed to be applied.

As one embodiment, the fourth signaling is sent after at least one of the K1 candidate configurations completes to be applied.

As one embodiment, the phrase of the fourth signaling being used for indicating that at least one of the K1 candidate configurations is applied means: the fourth signaling is used for indicating that one of the K1 candidate configurations is applied.

As one sub-embodiment of this embodiment, the fourth signaling indicates a candidate configuration in which one of the K1 candidate configurations completes to be applied.

As one sub-embodiment of this embodiment, the fourth signaling indicates that the one of the K1 candidate configurations has completed to be applied.

As one sub-embodiment of this embodiment, the fourth signaling indicates that the first candidate configuration of the K1 candidate configurations has completed to be applied.

As one sub-embodiment of this embodiment, a recipient of the fourth signaling is the maintenance base station of the first candidate cell, which is used for indicating that the first candidate configuration has been applied.

As one sub-embodiment of this embodiment, the fourth signaling comprises the candidate configuration identifier of the first candidate configuration, which is used for indicating that the first candidate configuration has been applied.

As one sub-embodiment of this embodiment, the fourth signaling comprises the candidate cell identifier of the first candidate cell, which is used for indicating that the first candidate configuration has been applied.

As one embodiment, the dotted-line block F6.1 is optional.

As one embodiment, the dotted-line block F6.1 exists.

As one sub-embodiment of this embodiment, the fourth signaling is sent.

As one sub-embodiment of this embodiment, the first candidate configuration completes to be applied before the fourth signaling is sent.

As one sub-embodiment of this embodiment, one of the K1 candidate configurations completes to be applied before the fourth signaling is sent.

As one sub-embodiment of this embodiment, in response to the first candidate configuration completing to be applied, the fourth signaling is sent.

As one sub-embodiment of this embodiment, in response to one of the K1 candidate configurations completing to be applied, the fourth signaling is sent.

As one embodiment, the dotted-line block F6.1 does not exist.

As one sub-embodiment of this embodiment, the fourth signaling is not sent.

As one sub-embodiment of this embodiment, the first candidate configuration is not applied.

As one sub-embodiment of this embodiment, the first candidate configuration fails to be applied.

As one sub-embodiment of this embodiment, in response to the first candidate configuration failing to be applied, one indication is sent to a higher layer, or the first serving cell is returned, or the first serving cell is continued to be applied, or a second candidate cell is determined among the K1 candidate cells.

As one embodiment, completing to be applied means being successfully applied.

As one embodiment, completing to be applied comprises being successfully applied.

### Embodiment 7

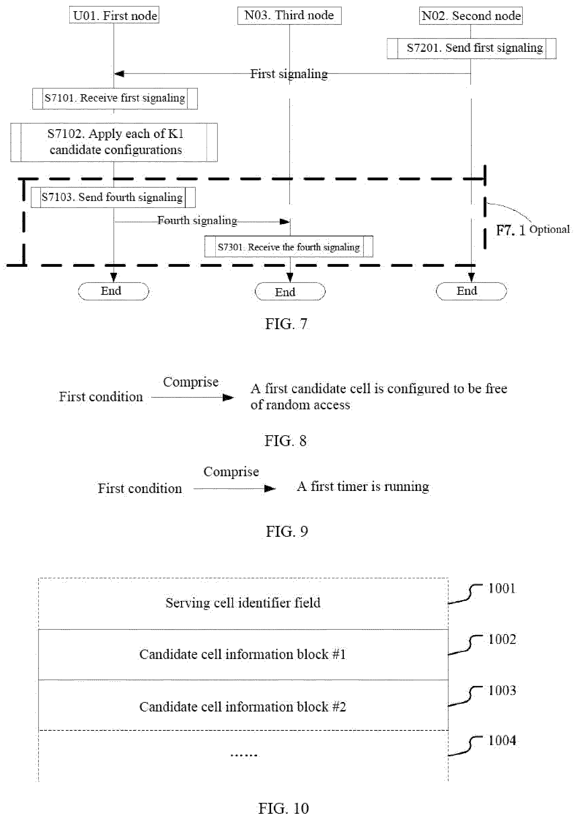

Embodiment 7 illustrates a radio signal transmission flow chart according to yet another embodiment of the present application, as shown in FIG. 7. It is particularly explained that the order in the present example does not limit the signal transmission order and the implementation order in the present application.

For **a first node U01,** in step S7101, first signaling is received, wherein the first signaling indicates K1 candidate cells, which are at least configured for a first serving cell, K1 being an integer greater than 1; in step S7102, each of the K1 candidate configurations is applied along with the first signaling; and in step S7103, in response to applying the at least one of the K1 candidate configurations, fourth signaling is sent.

For **a second node N02,** in step S7201, the first signaling is sent.

For **a third node N03,** in step S7301, fourth signaling is received.

In Embodiment 7, the first signaling is used for mobility control; the K1 candidate configurations respectively correspond to the K1 candidate cells; each of the K1 candidate configurations comprises a candidate cell identifier of one of the K1 candidate cells, and the candidate cell identifiers of any two of the K1 candidate cells are different; and the first signaling is used for triggering a behavior to apply at least one of the K1 candidate configurations;

As one embodiment, the first node U01 is one piece of user equipment, the second node N02 is one piece of base station equipment, and the third node N03 is one piece of base station equipment.

As one embodiment, the first node U01 is one piece of user equipment, the second node N02 is one piece of user equipment, and the third node N03 is piece of user equipment.

As one embodiment, the first node U01 is one piece of user equipment, the second node N02 is one piece of user equipment, and the third node N03 is one piece of base station equipment.

As one embodiment, the first node U01 is one piece of base station equipment, the second node N02 is one piece of base station equipment, and the third node N03 is one piece of base station equipment.

As one embodiment, the first node U01 is one piece of user equipment, the second node N02 is one piece of base station equipment, and the third node N03 is one piece of user equipment.

As one embodiment, the third node N03 is a maintenance base station of the second candidate cell.

As one embodiment, the first signaling indicates the K1 serving cells and the K1 candidate cells.

As one embodiment, the first signaling comprises identifiers of the K1 serving cells.

As one embodiment, the first signaling comprises indexes of the K1 serving cells.

As one embodiment, the first signaling comprises K1 candidate configuration indexes.

As one embodiment, the first signaling comprises an index of each of the K1 candidate cells.

As one embodiment, the first signaling comprises the identifiers of the K1 serving cells and candidate cell identifiers of the K1 candidate cells.

As one embodiment, one candidate cell information block comprises the candidate cell identifier of the candidate cell of the serving cell corresponding to one bit.

As one embodiment, one candidate cell information block comprises the index of the candidate cell of the serving cell corresponding to the one bit.

As one embodiment, one candidate cell information block comprises the candidate configuration index of the candidate cell of the serving cell corresponding to the one bit.

As one embodiment, each of the K2 candidate configurations comprises the candidate cell identifier of one of the K2 candidate cells.

As one embodiment, the phrase of "in response to applying at least one of the K1 candidate configurations" comprises: in response to applying each of the K1 candidate configurations.

As one embodiment, the phrase of "in response to applying at least one of the K1 candidate configurations" comprises: in response to applying one of the K1 candidate configurations.

As one embodiment, the phrase of "in response to applying at least one of the K1 candidate configurations" comprises: in response to applying the first candidate configuration of the K1 candidate configurations.

As one embodiment, the phrase of "in response to applying at least one of the K1 candidate configurations" comprises: when it is determined to apply at least one of the K1 candidate configurations.

As one embodiment, the phrase of "in response to applying at least one of the K1 candidate configurations" comprises: when at least one of the K1 candidate configurations is applied.

As one embodiment, the phrase of "in response to applying at least one of the K1 candidate configurations" comprises: when at least one of the K1 candidate configurations is successfully applied.

As one embodiment, a recipient of the fourth signaling is the maintenance base station of the first candidate cell.

As one embodiment, a recipient of the fourth signaling comprises a plurality of base station equipment.

As one embodiment, a recipient of the fourth signaling is the maintaining base station of the candidate cell corresponding to the at least one candidate configuration applied in the K1 candidate configurations.

As one embodiment, the fourth signaling comprises at least one UCI.

As one embodiment, the fourth signaling comprises at least one PUSCH.

As one embodiment, the fourth signaling comprises at least one PUCCH.

As one embodiment, a recipient of the fourth signaling comprises one piece of base station equipment.

As one embodiment, the fourth signaling is one UCI.

As one embodiment, the fourth signaling is one PUSCH.

As one embodiment, the fourth signaling is one PUCCH.

As one embodiment, the fourth signaling is one ACK.

As one embodiment, the fourth signaling comprises at least one ACK.

As one embodiment, the fourth signaling indicates one or more of the K1 candidate configurations.

As one embodiment, the fourth signaling indicates each of the K1 candidate configurations.

As one embodiment, the fourth signaling indicates greater than 1 and less than K1 of the K1 candidate configurations.

As one embodiment, the phrase of the fourth signaling being used for indicating that at least one of the K1 candidate configurations is applied comprises: the fourth signaling is used for indicating that each of the K1 candidate configurations is applied.

As one embodiment, the phrase of the fourth signaling being used for indicating that at least one of the K1 candidate configurations is applied comprises: the fourth signaling is used for indicating that one or more of the K1 candidate configurations are applied.

As one embodiment, the fourth signaling indicates an identifier of the at least one of the K1 candidate configurations.

As one embodiment, the fourth signaling indicates the at least one of the K1 candidate configurations and the serving cell corresponding to the at least one candidate configuration.

As one embodiment, a PUCCH resource used for carrying the fourth signaling is used for indicating that one of the K1 candidate configurations is applied.

As one embodiment, the fourth signaling indicates one of the at least one candidate configuration.

As one embodiment, the dotted-line block F7.1 is optional.

As one embodiment, the dotted-line block F7.1 exists.

As one sub-embodiment of this embodiment, the fourth signaling is sent.

As one sub-embodiment of this embodiment, at least one of the K1 candidate configurations completes to be applied before the fourth signaling is sent.

As one sub-embodiment of this embodiment, at least the first candidate configuration of the K1 candidate configurations completes to be applied before the fourth signaling is sent.

As one embodiment, the dotted-line block F7.1 does not exist.

As one sub-embodiment of this embodiment, the fourth signaling is not sent.

As one sub-embodiment of this embodiment, at least the first candidate configuration of the K1 candidate configurations does not complete to be applied.

As one sub-embodiment of this embodiment, each of the K1 candidate configurations does not complete to be applied.

### Embodiment 8

Embodiment 8 illustrates a schematic diagram in which a first condition comprises a first candidate cell being configured to be free of random access according to one embodiment of the present application.

In Embodiment 8, the first condition comprises the first candidate cell being configured to be free of random access.

As one embodiment, at least the first candidate cell being configured to be free of random access is used for determining the first candidate cell among the K1 candidate cells.

As one embodiment, at least the first candidate cell being configured to be free of random access is used for preferentially selecting the first candidate cell among the K1 candidate cells.

As one embodiment, the first candidate cell being configured to be free of random access and the third candidate cell not being configured to be free of random access is used for determining that a priority of the first candidate cell is higher than a priority of a third candidate cell; and the third candidate cell is one of the K1 candidate cells.

As one embodiment, in response to first signaling being received, if the first candidate cell is configured to be free of random access, the first candidate cell is determined among the K1 candidate cells.

As one embodiment, in response to the first signaling being received, if the first candidate cell and the third candidate cell are configured to be free of random access, the first candidate cell is determined between at least the first candidate cell and the third candidate cell.

As one embodiment, in response to the first signaling being received, if the first candidate cell is configured to be free of random access and the third candidate cell is not configured to be free of random access, the first candidate cell is determined between at least the first candidate cell and the third candidate cell; and the third candidate cell is one of the K1 candidate cells.

As one embodiment, at least one of the K1 candidate cells is not configured to be free of random access.

As one embodiment, when the first candidate configuration is applied, a random access process is not triggered; and the first candidate cell is configured to be free of random access.

As one embodiment, the phrase of the first candidate cell being configured to be free of random access comprises: second signaling indicates that the first candidate cell allows the grant-free random access.

As one sub-embodiment of this embodiment, one field in the second signaling indicates that the first candidate cell allows the grant-free random access.

As one sub-embodiment of this embodiment, one candidate configuration in the second signaling indicates that the first candidate cell allows the grant-free random access.

As one sub-embodiment of this embodiment, the first candidate configuration in the second signaling indicates that the first candidate cell allows the grant-free random access.

As one sub-embodiment of this embodiment, one field in the first candidate configuration in the second signaling indicates that the first candidate cell allows the grant-free random access.

As one embodiment, the phrase of "the first candidate cell being configured to be free of random access" comprises: the first signaling indicates that the first candidate cell allows the grant-free random access.

As one sub-embodiment of this embodiment, one field in the first signaling indicates that the first candidate cell allows the grant-free random access.

As one sub-embodiment of this embodiment, one candidate configuration information block in the first signaling indicates that the first candidate cell allows the grant-free random access.

As one sub-embodiment of this embodiment, the candidate configuration information block corresponding to the first candidate cell in the first signaling indicates that the first candidate cell allows the grant-free random access.

As one sub-embodiment of this embodiment, one field in the candidate configuration information block corresponding to the first candidate cell in the first signaling indicates that the first candidate cell allows the grant-free random access.

As one embodiment, the first candidate cell is one of at least one candidate cell, configured to be free of random access, of the K1 candidate cells.

As one embodiment, a plurality of candidate cells of the K1 candidate cells are configured to be free of random access, and the first candidate cell is one of the plurality of candidate cells.

As one sub-embodiment of this embodiment, the first candidate cell is any candidate cell of the plurality of candidate cells.

As one sub-embodiment of this embodiment, the first candidate cell is any of the plurality of candidate cells that is determined by the first node.

As one sub-embodiment of this embodiment, the first candidate cell is one of the plurality of candidate cells that meets the first condition.

As one embodiment, only one of the K1 candidate cells is configured to be free of random access, and the first candidate cell is the only one candidate cell.

As one embodiment, the phrase of the first candidate cell being configured to be free of random access comprises: the first candidate cell is indicated to be available for the grant-free random access.

As one embodiment, the phrase of "the first candidate cell being configured to be free of random access" comprises: the first candidate cell is allowed to perform mobility based on the grant-free random access.

### Embodiment 9

Embodiment 9 illustrates a schematic diagram in which a first condition comprises a first timer being running according to one embodiment of the present application, as shown in FIG. 9.

In Embodiment 9, the first condition comprises the first timer being running; and the first timer is used for determining whether uplink of the first candidate cell is time-aligned.

As one embodiment, at least the first timer being running is used for determining a first candidate cell among the K1 candidate cells.

As one embodiment, at least the first timer being running is used for preferentially selecting the first candidate cell among the K1 candidate cells.

As one embodiment, at least the first candidate cell being configured to be free of random access and the first timer being running are used for determining the first candidate cell among the K1 candidate cells.

As one embodiment, at least the first candidate cell being configured to be free of random access and the first timer being running are used for preferentially selecting the first candidate cell among the K1 candidate cells.

As one embodiment, when the first candidate configuration is applied, a random access process is not triggered; and the first candidate cell is configured to be free of random access and the first timer is running.

As one embodiment, when the first signaling is received, the first timer is running.

As one embodiment, the first condition comprises at least the first timer being running.

As one embodiment, the first condition is the first timer being running.

As one embodiment, the first condition comprises the first candidate cell being configured to be free of random access and the first timer being running.

As one embodiment, the first timer is an MAC sub-layer timer.

As one embodiment, the first timer is one timeAlignmentTimer.

As one embodiment, the name of the first timer comprises timeAlignmentTimer.

As one embodiment, the first timer is associated with a first TAG, and the first candidate cell is configured for the first TAG.

As one embodiment, the first timer is the timeAlignmentTimer associated with the first TAG, and the first candidate cell belongs to the first TAG.

As one embodiment, the first candidate configuration indicates that the first candidate cell belongs to the first TAG.

As one embodiment, the first candidate configuration comprises an identifier of the first TAG, and the first candidate cell belongs to the first TAG.

As one embodiment, a timer used for determining whether the uplink of one candidate cell is time-aligned is one timeAlignmentTimer.

As one embodiment, the name of the timer used for determining whether the uplink of one candidate cell is time-aligned comprises timeAlignmentTimer.

As one embodiment, the timer used for determining whether the uplink of any cell in the TAG to which one candidate cell belongs is time-aligned is one timeAlignmentTimer.

As one embodiment, the name of the timer used for determining whether the uplink of any cell in the TAG to which one candidate cell belongs is time-aligned comprises timeAlignmentTimer.

As one embodiment, at least one timer used for determining whether the uplink of at least one of the K1 candidate cells is time-aligned is not running.

As one embodiment, a timer used for determining whether the uplink of any candidate cell other than the first candidate cell among the K1 candidate cells is time-aligned is not running.

As one embodiment, at least one timer used for determining whether the uplink of any candidate cell other than the first candidate cell among the K1 candidate cells is time-aligned is not running.

As one embodiment, the first timer being running and the second timer being not running are used for determining that a priority of the first candidate cell is higher than a priority of a third candidate cell; and the second timer is used for determining whether the uplink of the third candidate cell is time-aligned; and the third candidate cell is one of the K1 candidate cells.

As one embodiment, in response to receiving the first signaling, if at least the first timer is running, the first candidate cell is determined among the K1 candidate cells.

As one embodiment, in response to receiving the first signaling, if at least the first timer and the second timer are running, the first candidate cell is determined between at least the first candidate cell and the third candidate cell; the second timer is used for determining whether the uplink of the third candidate cell is time-aligned; and the third candidate cell is one of the K1 candidate cells.

As one embodiment, in response to receiving the first signaling, if the first candidate cell is configured to be free of random access and the first timer is running, and the third candidate cell is not configured to be free of random access or the second timer is not running, the first candidate cell is determined among the K1 candidate cells; the second timer is used for determining whether the uplink of the third candidate cell is time-aligned; and the third candidate cell is one of the K1 candidate cells.

As one embodiment, a running state of the first timer is used for determining whether the uplink of the first candidate cell is time-aligned.

As one embodiment, if the first timer is running, the uplink of the first candidate cell is considered to be time-aligned; and if the first timer is not running, the uplink of the first candidate cell is considered to be time-unaligned.

As one embodiment, the first timer is used for determining whether the uplink of any cell belonging to the first TAG is time-aligned, and the first candidate cell belongs to the first TAG.

As one embodiment, the first timer is used for determining whether the uplink of any cell belonging to the TAG to which the first candidate cell belongs is time-aligned.

As one embodiment, any of the K1 candidate cells is configured for one TAG.

As one embodiment, any of the K1 candidate cells is associated with one timeAlignmentTimer.

As one embodiment, any of the K1 candidate cells is associated with any timer with timeAlignmentTimer included in the name.

As one embodiment, at least one of the K1 candidate cells is not configured for any TAG.

As one embodiment, at least one of the K1 candidate cells is not associated with any timeAlignmentTimer.

As one embodiment, at least one of the K1 candidate cells is not associated with any timer with timeAlignmentTimer included in the name.

### Embodiment 10

Embodiment 10 illustrates a schematic diagram of an entire or partial structure of a first signaling according to one embodiment of the present application, as shown in FIG. 10. In FIG. 10, a dotted-line block 1001 represents a serving cell identifier field, a block 1002 represents a candidate cell information block #1, a block 1003 represents a candidate cell information block #2, and a dotted-line block 1004 represents other candidate cell information blocks in first signaling.

In Embodiment 10, the first signaling comprises K1 candidate cell information blocks, and each of the K1 candidate cell information blocks indicates one of the K1 candidate cells; The first signaling is one MAC CE.

As one embodiment, the first signaling consists of the K1 candidate cell information blocks.

As one embodiment, the first signaling consists of the K1 candidate cell information blocks and one serving cell identifier field, and the one serving cell identifier field indicates a first serving cell.

As one embodiment, the first signaling comprises at least one MAC field other than the K1 candidate cell information blocks and the serving cell identification field; and the first signaling comprises the K1 candidate cell information blocks and the serving cell identification field.

As one embodiment, the first signaling comprises at least one MAC field other than the K1 candidate cell information blocks; and the first signaling comprises the K1 candidate cell information blocks, and the first signaling does not comprise the serving cell identification field.

As one embodiment, the dotted-line block 1001 is optional.

As one embodiment, the dotted-line block 1001 exists.

As one sub-embodiment of this embodiment, each candidate cell information block consists of one MAC field.

As one sub-embodiment of this embodiment, each candidate cell information block consists of at least two MAC fields.

As one sub-embodiment of this embodiment, the first signaling comprises a serving cell identifier of the first serving cell.

As one sub-embodiment of this embodiment, the first signaling comprises one serving cell identifier field, and the one serving cell identifier field indicates the first serving cell.

As one sub-embodiment of this embodiment, each of the K1 candidate cell information blocks does not comprise a field indicating the serving cell identifier.

As one embodiment, the dotted-line block 1001 does not exist.

As one sub-embodiment of this embodiment, each candidate cell information block consists of one MAC field.

As one sub-embodiment of this embodiment, each candidate cell information block consists of two MAC fields.

As one sub-embodiment of this embodiment, each candidate cell information block consists of at least three MAC fields.

As one sub-embodiment of this embodiment, the first signaling does not comprise the serving cell identifier of any serving cell.

As one sub-embodiment of this embodiment, the first signaling does not comprise any serving cell identifier field.

As one sub-embodiment of this embodiment, the first signaling comprises K1 serving cell identifier fields.

As one sub-embodiment of this embodiment, each of the K1 candidate cell information blocks comprises one serving cell identifier field.

As one auxiliary embodiment of this sub-embodiment, the K1 candidate configurations are respectively configured for K1 serving cells, and the first serving cell is one of the K1 serving cells; the behavior to apply at least one of the K1 candidate configurations comprises: applying each of the K1 candidate configurations; and each serving cell identifier field indicates one of the K1 serving cells.

As one embodiment, the dotted-line block 1004 is optional.

As one embodiment, the dotted-line block 1004 exists.

As one embodiment, the dotted-line block 1004 does not exist.

As one embodiment, this example does not limit the number of each candidate cell information block in the present application.

As one embodiment, this example does not limit the size of each candidate cell information block in the present application.

As one embodiment, this example does not limit the position of each candidate cell information block in the present application in the first signaling.

### Embodiment 11

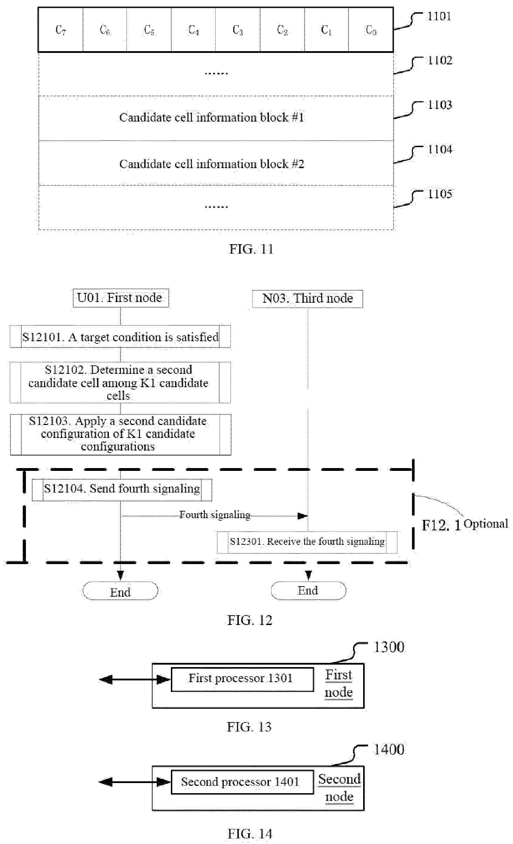

Embodiment 11 illustrates a schematic diagram of an entire or partial structure of a first signaling according to another embodiment of the present application, as shown in FIG. 11. In FIG. 11, a thick solid-line block 1101 represents the first 8 bits of a first bitmap, a dotted-line block 1102 represents the remaining bits of the first bitmap, a block 1103 represents candidate cell information block #1, a block 1104 represents candidate cell information block #2, and a dotted-line block 1105 represents other candidate cell information blocks in the first signaling.

In Embodiment 11, the first signaling comprises K1 candidate cell information blocks and the first bitmap, and each of the K1 candidate cell information blocks indicates one of K1 candidate cells; K1 candidate configurations are respectively configured for K1 serving cells, and the first serving cell is one of the K1 serving cells; the behavior to apply at least one of the K1 candidate configurations comprises: applying each of the K1 candidate configurations; and the first bitmap is used for indicating the K1 serving cells, and each bit in the first bitmap is used for indicating whether the first signaling comprises the candidate cell information block of the serving cell corresponding to each bit; and The first signaling is one MAC CE.

As one embodiment, a bit set as 1 in the first bitmap is used for indicating the K1 serving cells.

As one embodiment, the serving cell corresponding to the bit set as 1 in the first bitmap is one of the K1 serving cells.

As one embodiment, the K1 serving cells comprise the serving cell corresponding to any bit set as 1 in the first bitmap.

As one embodiment, the phrase of "one bit in the first bitmap being used for indicating whether the first signaling comprises the candidate cell information block of the serving cell corresponding to the one bit" comprises: if one bit in the first bitmap is set as 1, the first signaling comprises the candidate cell information block of the serving cell corresponding to the one bit; and if one bit in the first bitmap is set as 0, the first signaling does not comprise the candidate cell information block of the serving cell corresponding to the one bit, and i is an integer not less than 0 and not greater than N1-1.

As one embodiment, if Ci in the first bitmap is set as 1, the first signaling comprises the candidate cell information block of the serving cell corresponding to Ci; and if Ci in the first bitmap is set as 0, the first signaling does not comprise the candidate cell information block of the serving cell corresponding to Ci, and i is an integer not less than 0 and not greater than N1-1.

As one embodiment, if C0 and C2 in the first bitmap are set as 1 and the remaining bits are set as 0, the first signaling comprises the candidate cell information block of the serving cell corresponding to C0 and the candidate cell information block of the serving cell corresponding to C2, the candidate cell information block #1 is the candidate cell information block of the serving cell corresponding to C0, and the candidate cell information block #2 is the candidate cell information block of the serving cell corresponding to C2, wherein the first bitmap consists of 1 octet.

As one embodiment, if C2, C4 and C5 in the first bitmap are set as 1 and the remaining bits are set as 0, the first signaling comprises the candidate cell information block of the serving cell corresponding to C2, the candidate cell information block of the serving cell corresponding to C4 and the candidate cell information block of the serving cell corresponding to C5, the candidate cell information block #1 is the candidate cell information block of the serving cell corresponding to C2, the candidate cell information block #2 is the candidate cell information block of the serving cell corresponding to C4, and the candidate cell information block in the block 1105 is the candidate cell information block of the serving cell corresponding to C5; and wherein the first bitmap consists of 1 octet.

As one embodiment, the number of bits set as 1 in the first bitmap is equal to K1.

As one embodiment, the size of the first bitmap is N1 bits, and N1 is a positive integer.

As one embodiment, the size of the first bitmap is N1/8 octets.

As one embodiment, N1 is a positive integer multiple of 8.

As one embodiment, N1 is 8.

As one embodiment, N1 is greater than 8.

As one embodiment, N1 is 16.

As one embodiment, N1 is 32.

As one embodiment, the first bit map comprises at least eight bits: C0, C1, C2, C3, C4, C5, C6, and C7.

As one embodiment, a bit Ci in the first bitmap indicates the i-th serving cell, and i is an integer not less than 0 and not greater than N1-1.

As one embodiment, a bit C0 in the first bitmap indicates SpCell, and the bits C1, C2, C3, C4, C5, C6, and C7 indicate SCell.

As one embodiment, a bit Ci in the first bitmap indicates the serving cell with ServCellIndex equal to i, and i is an integer not less than 0 and not greater than N1-1.

As one embodiment, the first signaling consists of the K1 candidate cell information blocks and the first bitmap.

As one embodiment, the first signaling comprises at least one MAC field other than the K1 candidate cell information blocks and the first bitmap.

As one embodiment, the dotted-line block 1102 is optional.

As one embodiment, the dotted-line block 1102 exists.

As one embodiment, the dotted-line block 1102 does not exist.

As one embodiment, the dotted-line block 1105 is optional.

As one embodiment, the dotted-line block 1105 exists.

As one embodiment, the dotted-line block 1105 does not exist.

As one embodiment, this example does not limit the size of the first bitmap in the present application.

As one embodiment, this example does not limit the number of bits set as 1 in the first bitmap in the present application.

As one embodiment, this example does not limit the name of each field in the first bitmap in the present application.

As one embodiment, this example does not limit the name of Ci in the first bitmap in the present application.

As one embodiment, this example does not limit the number of each candidate cell information block in the present application.

As one embodiment, this example does not limit the size of each candidate cell information block in the present application.

As one embodiment, this example does not limit the position of each candidate cell information block in the present application in the first signaling.

As one embodiment, this example does not limit the position of the first bitmap and the candidate cell information block in the present application in the first signaling.

### Embodiment 12

Embodiment 12 illustrates a radio signal transmission flow chart according to still another embodiment of the present application, as shown in FIG. 12. It is particularly explained that the order in the present example does not limit the signal transmission order and the implementation order in the present application.

For **a first node U01**, in step S12101, a target condition is satisfied; in step S12102, when the target condition is satisfied, a second candidate cell is determined among K1 candidate cells; in step S12103, a second of K1 candidate configurations is applied; and in step S12104, in response to applying the at least one of the K1 candidate configurations, fourth signaling is sent.

For **a third node N03**, in step S12301, fourth signaling is received.

In Embodiment 12, the second candidate configuration is configured for the second candidate cell; and the target condition comprises the first candidate configuration failing to be applied.

The first processor, when the target condition is satisfied, determines the second candidate cell in the K1 candidate cells, and applies the second of the K1 candidate configurations; the second candidate configuration is configured for the second candidate cell; and the target condition comprises the first candidate configuration failing to be applied.

As one embodiment, the target condition comprises the first signaling indicating a plurality of candidate cells, wherein the first signaling indicates that the plurality of candidate cells are used for determining to execute the second candidate configuration after the first candidate configuration fails to be applied.

As one embodiment, the target condition comprises a first signaling indication comprising an indication, wherein the one indication is used for determining to execute the second candidate configuration after the first candidate configuration fails to be applied.

As one embodiment, the target condition comprises the second signaling indication comprising an indication, wherein the one indication is used for determining to execute the second candidate configuration after the first candidate configuration fails to be applied.

As one embodiment, the target condition is related to whether the second candidate cell is configured to be free of random access.

As one embodiment, the target condition is independent of whether the second candidate cell is configured to be free of random access.

As one embodiment, the target condition is related to a timer used for determining whether uplink of the second candidate cell is time-aligned.

As one embodiment, the target condition is independent of a timer used for determining whether the uplink of the second candidate cell is time-aligned.

As one embodiment, a timer expiration is used for determining that the first candidate configuration fails to be applied.

As one sub-embodiment of this embodiment, the one timer is T304.

As one sub-embodiment of this embodiment, the one timer is T304-r18.

As one sub-embodiment of this embodiment, the one timer is an MAC sub-layer timer.

As one sub-embodiment of this embodiment, the one timer is used for LTM.

As one sub-embodiment of this embodiment, the one timer is configured for the first candidate cell.

As one embodiment, random access failure on the first candidate cell is used for determining that the first candidate configuration fails to be applied.

As one embodiment, downlink synchronization failure on the first candidate cell is used for determining that the first candidate configuration fails to be applied.

As one embodiment, the second candidate cell is a candidate cell with the second highest priority among the K1 candidate cells.

As one embodiment, the second candidate cell is a candidate cell determined by the first node among the K1 candidate cells.

As one embodiment, in response to the second candidate configuration failing to be applied, the MAC sub-layer of the first node sends one indication to the RRC sub-layer of the first node; the first node receives the one indication at the RRC sub-layer; and in response to the first node receiving the one indication at the RRC sub-layer, it is considered that a Radio Link Failure (RLF) occurs in the MCG.

As one embodiment, K1 is equal to 2.

As one embodiment, K1 is greater than 2.

As one embodiment, another timer expiration is used for determining that the second candidate configuration fails to be applied.

As one sub-embodiment of this embodiment, the other timer is T304.

As one sub-embodiment of this embodiment, the other timer is T304-r18.

As one sub-embodiment of this embodiment, the other timer is the MAC sub-layer timer.

As one sub-embodiment of this embodiment, the other timer is used for LTM.

As one sub-embodiment of this embodiment, the other timer is the one timer.

As one sub-embodiment of this embodiment, the other timer is configured for the second candidate cell.

As one embodiment, the third node is a maintenance base station of the second candidate cell.

As one embodiment, the dotted-line block F12.1 is optional.

As one embodiment, the dotted-line block F12.1 exists.

As one sub-embodiment of this embodiment, the fourth signaling is sent.

As one sub-embodiment of this embodiment, the second candidate configuration is applied before the fourth signaling is sent.

As one sub-embodiment of this embodiment, in response to the second candidate configuration completing to be applied, the fourth signaling is sent.

As one sub-embodiment of this embodiment, the fourth signaling indicates that the second candidate configuration completes to be applied.

As one sub-embodiment of this embodiment, a recipient of the fourth signaling is the maintenance base station of the second candidate cell, which is used for indicating that the second candidate configuration has been applied.

As one sub-embodiment of this embodiment, the fourth signaling comprises the candidate configuration identifier of the second candidate configuration, which is used for indicating that the second candidate configuration has been applied.

As one sub-embodiment of this embodiment, the fourth signaling comprises the candidate cell identifier of the second candidate cell, which is used for indicating that the second candidate configuration has been applied.

As one embodiment, the dotted-line block F12.1 does not exist.

As one sub-embodiment of this embodiment, the fourth signaling is not sent.

As one sub-embodiment of this embodiment, the second candidate configuration is not applied.

As one sub-embodiment of this embodiment, the second candidate configuration fails to be applied.

### Embodiment 13

Embodiment 13 illustrates a structural block diagram of a processing device used in a first node according to one embodiment of the present application, as shown in FIG. 13. In FIG. 13, a processing device 1300 in a first node comprises a first processor 1301.

A first processor 1301 receives a first signaling, wherein the first signaling indicates K1 candidate cells, which are at least configured for a first serving cell, K1 being an integer greater than 1; and applying at least one of K1 candidate configurations along with the first signaling,

In Embodiment 13, the first signaling is used for mobility control; the K1 candidate configurations respectively correspond to the K1 candidate cells; each of the K1 candidate configurations comprises a candidate cell identifier of one of the K1 candidate cells, and the candidate cell identifiers of any two of the K1 candidate cells are different; and the first signaling is used for triggering a behavior to apply at least one of the K1 candidate configurations.

As one embodiment, the first processor 1301 receives a second signaling, wherein the second signaling is used for determining K2 candidate configurations, wherein the second signaling is RRC sub-layer signaling; each of the K1 candidate configurations is one of the K2 candidate configurations; and K1 is not greater than K2.

As one embodiment, the first processor 1301 sends a third signaling, wherein the third signaling indicates measurement results of at least the K1 candidate cells, wherein the third signaling is signaling under an RRC sub-layer; and the third signaling is used for triggering the first signaling.

As one embodiment, the K1 candidate configurations are respectively configured for K1 serving cells, wherein the first serving cell is one of the K1 serving cells; and the behavior to apply at least one of the K1 candidate configurations comprises: applying each of the K1 candidate configurations.

As one embodiment, the first processor 1301 determines a first candidate cell among the K1 candidate cells, wherein at least a first condition being satisfied is used for determining the first candidate cell among the K1 candidate cells; the first condition is independent of the measurement results of the K1 candidate cells; the behavior to apply at least one of the K1 candidate configurations comprises: applying a first candidate configuration of the K1 candidate configurations; the K1 candidate configurations are configured for the first serving cell; and the first candidate configuration is one of the K1 candidate configurations.

As one embodiment, the first condition comprises the first candidate cell being configured to be free of random access.

As one embodiment, the first condition comprises the first timer being running; and the first timer is used for determining whether uplink of the first candidate cell is time-aligned.

As one embodiment, the first processor 1301, in response to applying at least one of the K1 candidate configurations, sends a fourth signaling, wherein the fourth signaling is used for indicating that at least one of the K1 candidate configurations is applied.

As one embodiment, the first processor 1301 comprises the antenna 452, the receiving device 454, the multi-antenna receiving processor 458, the receiving processor 456, the controller/processor 459, the memory 460 and the data source 467 in FIG. 4 of the present application.

As one embodiment, the first processor 1301 comprises the antenna 452, the receiving device 454, the multi-antenna receiving processor 458, and the receiving processor 456 in FIG. 4 of the present application.

As one embodiment, the first processor 1301 comprises the antenna 452, the receiving device 454, and the receiving processor 456 in FIG. 4 of the present application.

As one embodiment, the first processor 1301 comprises the antenna 452, the transmitting device 454, the multi-antenna transmitting processor 457, the transmitting processor 468, the controller/processor 459, the memory 460 and the data source 467 in FIG. 4 of the present application.

As one embodiment, the first processor 1301 comprises the antenna 452, the transmitting device 454, the multi-antenna transmitting processor 457, and the transmitting processor 468 in FIG. 4 of the present application.

As one embodiment, the first processor 1301 comprises the antenna 452, the transmitting device 454, and the transmitting processor 468 in FIG. 4 of the present application.

### Embodiment 14

Embodiment 14 illustrates a structural block diagram of a processing device used in a second node according to one embodiment of the present application, as shown in FIG. 14. In FIG. 14, the processing device 1400 in the second node comprises a second processor 1401.

The second processor 1401 sends a first signaling, wherein the first signaling indicates K1 candidate cells, which are at least configured for a first serving cell, K1 being an integer greater than 1;
in Embodiment 14, at least one of the K1 candidate configurations is applied along with the first signaling; the first signaling is used for mobility control; the K1 candidate configurations respectively correspond to the K1 candidate cells; each of the K1 candidate configurations comprises a candidate cell identifier of one of the K1 candidate cells, and the candidate cell identifiers of any two of the K1 candidate cells are different; and the first signaling is used for triggering a behavior to apply at least one of the K1 candidate configurations.

As one embodiment, the second processor 1401 sends a second signaling, wherein the second signaling is used for determining K2 candidate configurations, wherein the second signaling is RRC sub-layer signaling; each of the K1 candidate configurations is one of the K2 candidate configurations; and K1 is not greater than K2.

As one embodiment, the second processor 1401 receives a third signaling, wherein the third signaling indicates measurement results of at least the K1 candidate cells, wherein the third signaling is signaling under an RRC sub-layer; and the third signaling is used for triggering the first signaling.

As one embodiment, the K1 candidate configurations are respectively configured for K1 serving cells, wherein the first serving cell is one of the K1 serving cells; and the behavior to apply at least one of the K1 candidate configurations comprises: applying each of the K1 candidate configurations.

As one embodiment, the first candidate cell is determined among the K1 candidate cells; at least the first condition being satisfied is used for determining the first candidate cell among the K1 candidate cells; the first condition is independent of the measurement results of the K1 candidate cells; the behavior to apply at least one of the K1 candidate configurations comprises: applying a first candidate configuration of the K1 candidate configurations; the K1 candidate configurations are configured for the first serving cell; and the first candidate configuration is one of the K1 candidate configurations.

As one embodiment, the first condition comprises the first candidate cell being configured to be free of random access.

As one embodiment, the first condition comprises the first timer being running; and the first timer is used for determining whether uplink of the first candidate cell is time-aligned.

As one embodiment, the second processor 1401 receives a fourth signaling, wherein in response to applying the at least one of the K1 candidate configurations, the fourth signaling is sent; and the fourth signaling is used for indicating that the at least one of the K1 candidate configurations is applied.

As one embodiment, the second processor 1401 comprises the antenna 420, the transmitting device 418, the multi-antenna transmitting processor 471, the transmitting processor 416, the controller/processor 475, and the memory 476 in FIG. 4 of the present application.

As one embodiment, the second processor 1401 comprises the antenna 420, the transmitting device 418, the multi-antenna transmitting processor 471, and the transmitting processor 416 in FIG. 4 of the present application.

As one embodiment, the second processor 1401 comprises the antenna 420, the transmitting device 418, and the transmitting processor 416 in FIG. 4 of the present application.

As one embodiment, the second processor 1401 comprises the antenna 420, the receiving device 418, the multi-antenna receiving processor 472, the receiving processor 470, the controller/processor 475, and the memory 476 in FIG. 4 of the present application.

As one embodiment, the second processor 1401 comprises the antenna 420, the receiving device 418, the multi-antenna receiving processor 472, and the receiving processor 470 in FIG. 4 of the present application.

As one embodiment, the second processor 1401 comprises the antenna 420, the receiving device 418, and the receiving processor 470 in FIG. 4 of the present application.

Those skilled in the art can understand that all or parts of the steps in the above-mentioned method can be completed by instructing the relevant hardware by a program, and the program can be stored in a computer-readable storage medium, such as a read-only memory, a hard disk or an optical disk. Optionally, all or parts of the steps in the above-mentioned embodiments can also be implemented by using one or more integrated circuits. Correspondingly, each module unit in the above-mentioned embodiments can be implemented in the form of hardware or in the form of a software function module. The present application is not limited to any specific form of combinations of software and hardware. The user equipment, the terminal and the UE in the present application include but are not limited to a drone, a communication module on the drone, a remote-controlled airplane, an aircraft, a small airplane, a mobile phone, a tablet computer, a notebook, a vehicle-mounted communication device, a radio sensor, an Internet card, an Internet of Things terminal, an RFID terminal, an NB-IOT terminal, an MTC (Machine Type Communication) terminal, an eMTC (enhanced MTC) terminal, a data card, an Internet card, a vehicle-mounted communication device, a low-cost mobile phone, a low-cost tablet computer and other radio communication devices. The base stations or the system devices in the present application include but are not limited to a macrocell base station, a microcell base station, a Femtocell, a relay base station, a gNB (NR node B) NR node B, a TRP (Transmitter Receiver Point) and other radio communication devices.

The above is only a preferred embodiment of the present application and is not intended to limit the scope of protection of the present application. Any modifications, equivalent replacements, improvements, etc. made within the spirit and principles of the present application shall be included in the protection scope of the present application.

## Claims

1. A first node used for radio communication, comprising:
a first processor for receiving first signaling, the first signaling indicating K1 candidate cells, which are at least configured for a first serving cell, and K1 being an integer greater than 1; and applying at least one of K1 candidate configurations along with the first signaling,
wherein the first signaling is used for mobility control; the K1 candidate configurations respectively correspond to the K1 candidate cells; each of the K1 candidate configurations comprises a candidate cell identifier of one of the K1 candidate cells, and the candidate cell identifiers of any two of the K1 candidate cells are different; and the first signaling is used for triggering a behavior to apply at least one of the K1 candidate configurations.

2. The first node according to claim 1, comprising:
the first processor for receiving second signaling, the second signaling being used for determining K2 candidate configurations,
wherein the second signaling is RRC sub-layer signaling; each of the K1 candidate configurations is one of the K2 candidate configurations; and K1 is not greater than K2.

3. The first node according to claim 1 or 2, comprising:
the first processor for sending third signaling, the third signaling at least indicating measurement results of the K1 candidate cells,
wherein the third signaling is signaling under an RRC sub-layer; and the third signaling is used for triggering the first signaling.

4. The first node according to any one of claims 1 to 3, wherein the K1 candidate configurations are respectively configured for K1 serving cells, and the first serving cell is one of the K1 serving cells; and the behavior to apply at least one of the K1 candidate configurations comprises: applying each of the K1 candidate configurations.

5. The first node according to any one of claims 1 to 3, comprising:
the first processor for determining a first candidate cell among the K1 candidate cells,
wherein at least a first condition being satisfied is used for determining the first candidate cell among the K1 candidate cells; the first condition is independent of the measurement results of the K1 candidate cells; the behavior to apply at least one of the K1 candidate configurations comprises: applying a first candidate configuration of the K1 candidate configurations; the K1 candidate configurations are configured for the first serving cell; and the first candidate configuration is one of the K1 candidate configurations.

6. The first node according to claim 5, wherein the first condition comprises the first candidate cell being configured to be free of random access.

7. The first node according to claim 5 or 6, wherein the first condition comprises a first timer being running; and the first timer is used for determining whether uplink of the first candidate cell is time-aligned.

8. The first node according to any one of claims 1 to 7, comprising:
the first processor for sending fourth signaling in response to applying the at least one of the K1 candidate configurations,
wherein the fourth signaling is used for indicating that at least one of the K1 candidate configurations is applied.

9. A second node used for radio communication, comprising:
a second processor for sending first signaling, the first signaling indicating K1 candidate cells, which are at least configured for a first serving cell, and K1 being an integer greater than 1,
wherein at least one of K1 candidate configurations is applied along with the first signaling; the first signaling is used for mobility control; the K1 candidate configurations respectively correspond to the K1 candidate cells; each of the K1 candidate configurations comprises a candidate cell identifier of one of the K1 candidate cells, and the candidate cell identifiers of any two of the K1 candidate cells are different; and the first signaling is used for triggering a behavior to apply at least one of the K1 candidate configurations.

10. A method used in a first node for radio communication, comprising:
receiving first signaling, the first signaling indicating K1 candidate cells, which are at least configured for a first serving cell, and K1 being an integer greater than 1; and
applying at least one of K1 candidate configurations along with the first signaling,
wherein the first signaling is used for mobility control; the K1 candidate configurations respectively correspond to the K1 candidate cells; each of the K1 candidate configurations comprises a candidate cell identifier of one of the K1 candidate cells, and the candidate cell identifiers of any two of the K1 candidate cells are different; and the first signaling is used for triggering a behavior to apply at least one of the K1 candidate configurations.

11. A method used in a second node for radio communication, comprising:
sending first signaling, the first signaling indicating K1 candidate cells, which are at least configured for a first serving cell, and K1 being an integer greater than 1,
wherein at least one of K1 candidate configurations is applied along with the first signaling; the first signaling is used for mobility control; the K1 candidate configurations respectively correspond to the K1 candidate cells; each of the K1 candidate configurations comprises a candidate cell identifier of one of the K1 candidate cells, and the candidate cell identifiers of any two of the K1 candidate cells are different; and the first signaling is used for triggering a behavior to apply at least one of the K1 candidate configurations.
